# EUROPEAN PATENT APPLICATION

(11) **EP 4 607 259 A1**
(43) Date of publication of application: **27.08.2025**
(21) Application number: 23880251.6
(22) Date of filing: 19.10.2023
(51) Int. Cl.: G02B 13/00, G02B 9/64

(54) **OPTICAL SYSTEM, OPTICAL DEVICE, AND CAMERA MODULE INCLUDING SAME**

(30) Priority: 19.10.2022 KR 20220135022
(71) Applicant: LG INNOTEK CO. LTD, Gangseo-gu Seoul 07796 (KR)
(72) Inventor: SHIM, Hyung Rok, Seoul 07796 (KR)
(74) Representative: DREISS Patentanwälte PartG mbB
(86) International application number: PCT/KR2023/016233
(87) International publication number: WO 2024/085675

(57) **Abstract**

Disclosed is an optical system comprising: a first lens group adjacent to an object side and having a first optical axis; a second lens group adjacent to an image side and having a second optical axis; and a first optical path conversion member disposed between the first lens group and the second lens group, wherein the second lens group can move. The optical system is in a wide state when the center of the second lens group overlaps with the first optical path conversion member in the second optical axis direction, and the optical system is in a tele-state when the center of the second lens group does not overlap with the first optical path conversion member in the second optical axis direction.

## Description

### [Technical Field]

The present invention relates to an optical system, an optical device, and a camera module including the same.

### [Background Art]

Cameras capture images or videos of subjects and are mounted in mobile devices, drones, vehicles, and the like. A camera module may have an image stabilization (IS) function for compensating for or preventing shaking of an image due to movement of a user in order to improve quality of the image, an auto focusing (AF) function for adjusting a focal length of a lens by automatically adjusting a distance between an image sensor and a lens, and a zooming function for increasing or decreasing a magnification of an image of a subject at a long distance using a zoom lens and capturing an image of the subject.

However, since a structure of a small camera module is complex, there are problems that it is difficult to assemble the small camera module, and a brightness or F-number (Fno) decreases due to a plurality of drivers and miniaturization.

### [Technical Problem]

A technical objective to be achieved through the present invention is to provide an optical system in which a lens having a sufficient size is provided in front of an optical path conversion member (prism) so that an F-number (Fno) is small and a brightness is sufficiently secured, an optical device, and a camera module.

In addition, the present invention is directed to providing an optical system which has a simple structure and is easy to assemble, an optical device, and a camera module.

In addition, the present invention is directed to providing an optical system which includes one mover or driver and provides a zooming function, an optical device, and a camera module.

The present invention is directed to providing an optical system, which is appliable to an ultra-slim, ultra-small, and high-density camera, and an optical device.

Objectives to be solved by embodiments are not limited thereto and will include purposes or effects which may be understood from the technical solution or modes of invention described below.

### [Technical Solution]

An optical system according to an embodiment of the present invention includes a first lens group disposed adjacent to an object side and has a first optical axis, a second lens group disposed adjacent to an image side and has a second optical axis, and a first optical path conversion member disposed between the first lens group and the second lens group, wherein the second lens group is moveable, the optical system is in a wide state when a center of the second lens group overlaps the first optical path conversion member in a direction of the second optical axis, and the optical system is in a tele state when the center of the second lens group does not overlap the first optical path conversion member in the direction of the second optical axis.

In the tele state, the first lens group may overlap the second lens group in the direction of the second optical axis.

In at least one of the tele state and the wide state, a ratio of a focal length to an F-number (Fno) may range from 5 to 7.

A distance between the first lens group and the second lens group may be 5 mm or more.

In the wide state, a distance between an image side surface of an outermost side lens of the second lens group and an image sensor may be 5 mm or more.

In the wide state, the second lens group may be aligned with and overlap the first optical path conversion member along the second optical axis.

In the wide state, the second lens group may be aligned with the first optical path conversion member, and at least a portion of the second lens group may not overlap the first optical path conversion member along the second optical axis.

A ratio of a total track length (TTL) to a back focus length (BFL) may range from 4 to 10.

An optical system according to another embodiment includes a first lens group, a second lens group disposed apart from the first lens group, and a first optical path conversion member disposed between the first lens group and the second lens group, wherein an Fno is 3.5 or less when light passes through the first lens group and does not pass through the second lens group.

The first lens group may be disposed in a thickness direction of the first optical path conversion member.

### [Advantageous Effects]

According to embodiments of the present invention, an optical system in which a lens having a sufficient size is provided in front of an optical path conversion member (prism) so that an F-number (Fno) is small and a brightness is sufficiently secured, an optical device, and a camera module can be implemented.

**In** addition, the present invention can implement an optical system which has a simple structure and is easy to assemble, an optical device, and a camera module.

**In** addition, the present invention can implement an optical system which includes one mover or driver and provides a zooming function, an optical device, and a camera module.

**In** addition, the present invention can provide an optical system that has sufficient space for an optical path conversion member to perform a zoom magnification, and an optical device.

The present invention can implement an optical system, which is appliable to an ultra-slim, ultra-small, and high-density camera, and an optical device.

Various useful advantages and effects of the present invention are not limited to the above-described content, and can be more easily understood from the detailed description of specific embodiments of the present invention.

### Description of Drawings]

FIG. 1 is a perspective view illustrating a camera module according to an embodiment.
FIG. 2 is a conceptual view illustrating an optical device according to a first embodiment.
FIG. 3 is a top view illustrating the optical device in a first state according to the first embodiment.
FIG. 4 is a top view illustrating the optical device in a second state according to the first embodiment.
FIG. 5 is a conceptual view illustrating an optical device according to a second embodiment.
FIG. 6 is a top view illustrating the optical device in a second state according to the second embodiment.
FIG. 7 is a top view illustrating the optical device in a first state according to the second embodiment.
FIG. 8A is a conceptual view illustrating an optical system according to a first embodiment.
FIG. 8B is a cross-sectional view illustrating the optical system in a wide state according to the first embodiment.
FIG. 9A is a graph showing longitudinal spherical aberrations, astigmatic field curves, and distortion of light of wavelengths of 435 nm, 486 nm, 546 nm, 587 nm, and 656 nm in the optical system in the wide state according to the first embodiment.
FIG. 9B is a graph showing a diffraction modulation transfer function (MTF) in the optical system in the wide state according to the first embodiment.
FIG. 10 is a cross-sectional view illustrating the optical system in a tele state according to the first embodiment.
FIG. 11A is a graph showing longitudinal spherical aberrations, astigmatic field curves, and distortion of light of wavelengths of 435 nm, 486 nm, 546 nm, 587 nm, and 656 nm in the optical system in the tele state according to the first embodiment.
FIG. 11B is a graph showing a diffraction MTF in the optical system in the tele state according to the first embodiment.
FIG. 12 is a cross-sectional view illustrating an optical system in a wide state according to a second embodiment.
FIG. 13 is a graph showing longitudinal spherical aberrations, astigmatic field curves, and distortion of light of wavelengths of 435 nm, 486 nm, 546 nm, 587 nm, and 656 nm in the optical system in the wide state according to the second embodiment.
FIG. 14 is a cross-sectional view illustrating the optical system in a tele state according to the second embodiment.
FIG. 15 is a graph showing longitudinal spherical aberrations, astigmatic field curves, and distortion of light of wavelengths of 435 nm, 486 nm, 546 nm, 587 nm, and 656 nm in the optical system in the tele state according to the second embodiment.
FIG. 16 is a cross-sectional view illustrating an optical system in a wide state according to a third embodiment.
FIG. 17 is a graph showing longitudinal spherical aberrations, astigmatic field curves, and distortion of light of wavelengths of 435 nm, 486 nm, 546 nm, 587 nm, and 656 nm in the optical system in the wide state according to the third first embodiment.
FIG. 18 is a cross-sectional view illustrating the optical system in a tele state according to the third embodiment.
FIG. 19 is a graph showing longitudinal spherical aberrations, astigmatic field curves, and distortion of light of wavelengths of 435 nm, 486 nm, 546 nm, 587 nm, and 656 nm in the optical system in the tele state according to the third embodiment.
FIG. 20 is a perspective view illustrating a mobile terminal to which the camera module according to the embodiment is applied.
FIG. 21 is a perspective view illustrating a vehicle to which the camera module according to the embodiment is applied.

### [Modes of the Invention]

Since the present invention allows various changes and has many embodiments, specific embodiments will be illustrated in the accompanying drawings and described. However, this is not intended to limit the present invention to the specific embodiments, and it is to be appreciated that all changes, equivalents, and substitutes that fall within the spirit and technical scope of the present invention are encompassed in the present invention.

Although the terms "first," "second," and the like may be used herein to describe various elements, these elements should not be limited by these terms. These terms are only used to distinguish one element from another element. For example, a second element could be termed a first element, and a first element could similarly be termed a second element without departing from the scope of the present invention. The term "and/or" includes any one or any combination of a plurality of associated listed items.

When a first element is referred to as being "connected" or "coupled" to a second element, it will be understood that the first element may be directly connected or coupled to the second element, or a third element may be present therebetween. In contrast, when an element is referred to as being "directly connected" or "directly coupled" to another element, it will be understood that there are no intervening elements.

Terms used herein are for the purpose of describing particular embodiments only and are not intended to limit the present invention. The singular forms are intended to include the plural forms, unless the context clearly indicates otherwise. It should be further understood that the terms "comprise" or "include" used in the present specification specify the presence of stated features, numbers, steps, operations, elements, components or combinations thereof but do not preclude the presence or addition of one or more other features, numbers, steps, operations, elements, components, or combinations thereof.

Unless otherwise defined, all terms including technical and scientific terms used herein have meanings which are the same as meanings generally understood by those skilled in the art. Terms, such as those defined in commonly used dictionaries, should be interpreted as having meanings that are consistent with their meanings in the context of the relevant art and will not be interpreted in an idealized or overly formal sense unless expressly so defined here.

Hereinafter, embodiments will be described in detail with reference to the accompanying drawings, components that are the same or correspond to each other will be denoted by the same or corresponding reference numerals in all drawings, and redundant descriptions thereof will be omitted.

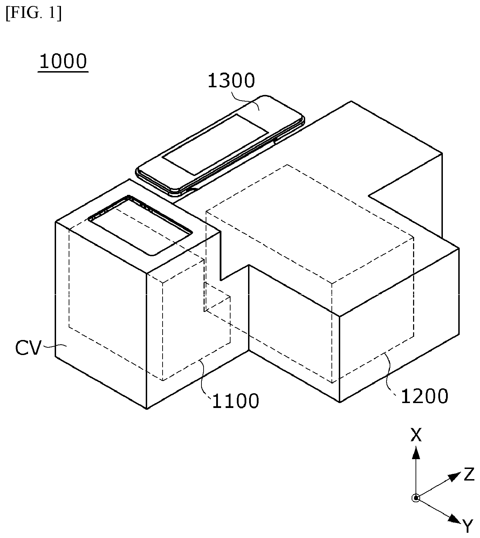

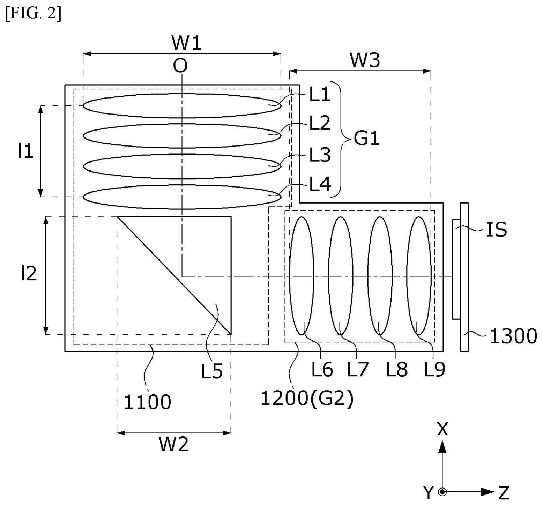

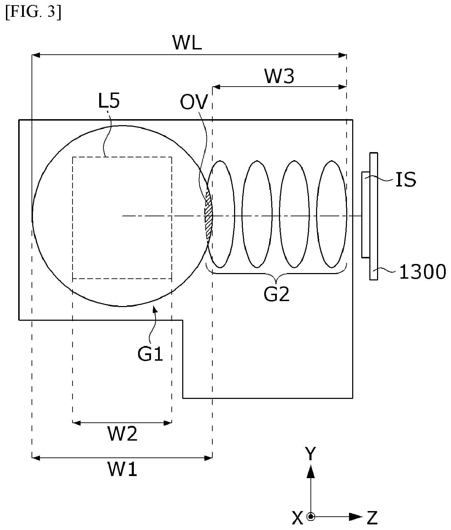

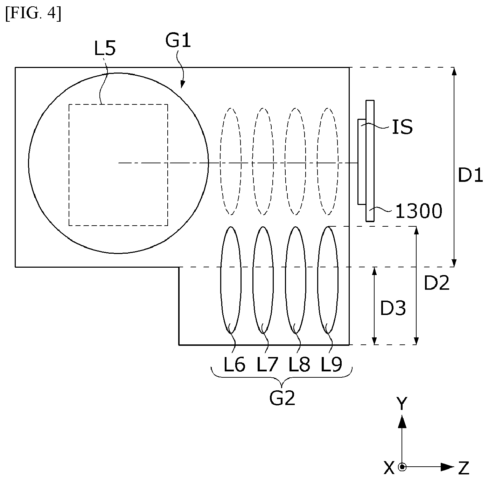

FIG. 1 is a perspective view illustrating a camera module according to an embodiment, and FIG. 2 is a conceptual view illustrating an optical device according to a first embodiment. FIG. 3 is a top view illustrating the optical device in a first state according to the first embodiment, and FIG. 4 is a top view illustrating the optical device in a second state according to the first embodiment.

Referring to FIG. 1, a camera module 1000 according to the embodiment may include a cover CV, a first camera actuator 1100, a second camera actuator 1200, and a circuit board 1300. In this case, the first camera actuator 1100 may be used interchangeably with a first actuator, and the second camera actuator 1200 may be used interchangeably with a second actuator.

The cover CV may cover the first camera actuator 1100 and the second camera actuator 1200. A coupling force between the first camera actuator 1100 and the second camera actuator 1200 may be improved by the cover CV.

In addition, the cover CV may be formed of a material capable of blocking electromagnetic waves. Accordingly, the first camera actuator 1100 and the second camera actuator 1200 which are in the cover CV may be easily protected.

The cover CV may have a structure partially protruding in a first direction (X-axis direction) due to a first lens group of the first camera actuator 1100. In addition, the cover CV may have a structure partially protruding in a direction, for example, a third direction (Y-axis direction), perpendicular to a second direction to correspond to movement of a second lens group in the second camera actuator 1200.

In addition, the first camera actuator 1100 may be an optical image stabilizer (OIS) actuator. For example, the first camera actuator 1100 may change an optical axis O.

The first camera actuator 1100 may include a fixed focal length les disposed in a predetermined barrel (not shown). The fixed focal length les may be called a "single focal length lens" or "single lens."

The first camera actuator 1100 may change an optical path. In the embodiment, the first camera actuator 1100 may change the optical path to be vertical using an optical member or a first optical path conversion member (for example, a prism or mirror). For example, the first optical path conversion member may change light in the first direction (X-axis direction) to light in a second direction (Z-axis direction). Alternatively, the optical member may change light along a first axis to light along a second axis. Due to this configuration, even when a thickness of a mobile terminal decreases, a lens structure greater than the thickness of the mobile terminal may be disposed in the mobile terminal by changing the optical path, thereby performing magnification, auto focusing (AF), zooming, and OIS functions. In addition, a distance in the present specification may correspond to a distance along the optical path.

However, the present invention is not limited thereto, and the camera module may also change the optical path by a right or certain angle a plurality of times.

The second camera actuator 1200 may be disposed behind the first camera actuator 1100. The second camera actuator 1200 may be coupled to the first camera actuator 1100. In addition, the coupling therebetween may be performed according to any of various methods.

In addition, the second camera actuator 1200 may be a zoom actuator. For example, the second camera actuator 1200 may support one or a plurality of lenses and move the one or plurality of lenses to perform a zoom function according to a control signal of a predetermined controller.

In addition, the one or plurality of lenses may be independently or individually moved in a direction perpendicular to the first direction (X-axis direction). For example, in the camera module, the second direction (Z-axis direction) may correspond to an optical axis direction. In the second camera actuator 1200, a second lens group G2 may be moved in directions (second and third directions) perpendicular to the optical axis direction or the first direction (X-axis direction) to be aligned or misaligned with the optical path. Alternatively, the second lens group G2 may be moved in the optical axis direction or the first direction (X-axis direction) to be aligned or misaligned with the optical path. Hereinafter, it will be described that the second lens group G2 is moved in the third direction (Y-axis direction) or aligned or misaligned therewith.

The circuit board 1300 may be disposed behind the second camera actuator 1200. The circuit board 1300 may be electrically connected to the second camera actuator 1200 and the first camera actuator 1100. In addition, the circuit board 1300 may be provided as a plurality of circuit boards 1300.

The camera module according to the embodiment may be provided as a single or plurality of camera modules. For example, the plurality of camera modules may include a first camera module and a second camera module.

In addition, the first camera module may include a single or plurality of actuators. For example, the first camera module may include the first camera actuator 1100 and the second camera actuator 1200.

In addition, the second camera module may include an actuator (not shown) which is disposed in a predetermined housing (not shown) and drives a lens part. The actuator may be a voice coil motor, a micro-actuator, a silicone actuator, or the like, and any of various methods such as an electrostatic method, a thermal method, a bi-morph method, and an electrostatic force method may be applied to the actuator, but the present invention is not limited thereto. In addition, in the present specification, the camera actuator may be called an actuator or the like. In addition, the camera module provided as the plurality of camera modules may be mounted in any of various electronic devices such as mobile terminals. In addition, the actuator may be a device which moves or tilts a lens and an optical member. However, hereinafter, the actuator will be described as conceptually including a lens or optical member. In addition, the actuator may be called a "lens transfer device," "lens moving device," "optical member transfer device," "optical member moving device," or the like.

Referring to FIGS. 2 to 4, the optical device according to the first embodiment may include a first lens group G1, a first optical path conversion member L5, and a second lens group G2.

In addition, the optical device according to the first embodiment may further include an image sensor IS and a circuit board 1300. In this case, the image sensor IS may be disposed on an optical path and may receive light. In addition, the image sensor IS may convert the received light into an electric signal and transmit the electric signal to the outside through the circuit board or the like.

In addition, the optical device according to the first embodiment may include a first camera actuator, a second camera actuator, and the like. For example, the first camera actuator may include the first lens group G1 and the first optical path conversion member L5. In addition, the second camera actuator may include the second lens group G2. Hereinafter, the optical device according to the present embodiment will be described based on the first lens group G1, the first' optical path conversion member L5, the second lens group G2, and the image sensor IS.

First, in the optical device according to the embodiment, the first optical path conversion member L5 may change an optical path of incident light incident from an object side in a first direction (X-axis direction) to an optical path in a second direction. The first optical path conversion member L5 may be called a "fifth lens." In addition, the first optical path conversion member may be called a "reflection member" or the like. In addition, the first lens group G1 may have a first optical axis. That is, the first optical axis may correspond to a central axis of the first lens group G1. In addition, the first optical axis may correspond to the first direction or X-axis direction. In addition, the second lens group G2 may have a second optical axis. That is, the second optical axis may correspond to the central axis of the second lens group G2. The second optical axis may correspond to the second direction (Z-axis direction).

Accordingly, light may be incident on the first optical path conversion member L5 in the first direction (X-axis direction), and then the light may be reflected thereby and emitted in the second direction (Z-axis direction). To this end, the first optical path conversion member L5 may include a prism, a reflection mirror, etc.

The first lens group G1 may be located between the first optical path conversion member L5 and the object side. Alternatively, the first lens group G10 may be located in front of the first optical path conversion member L5. In addition, the first lens group G1 may be disposed close to the object side. In the present specification, "in front of" and "front side" mean a direction of the object side on the optical path. In addition, "behind" and "rear side" mean a direction opposite to the direction of the object side or mean a direction toward the image sensor on the optical path.

The first lens group G1 may be located at an object side of the first optical path conversion member L5 and may include at least one lens.

The first lens group G1 may be disposed in a thickness direction of the first optical path conversion member or in the first direction.

For example, the first lens group G1 may include a first lens L1, a second lens L2, a third lens L3, and a fourth lens L4 on the optical path. The first lens L1, the second lens L2, the third lens L3, and the fourth lens L4 may be sequentially disposed from the object side toward an image side (corresponding to the image sensor).

In addition, the first lens L1, the second lens L2, the third lens L3, and the fourth lens L4 may be disposed above the first optical path conversion member L5.

The second lens group G2 may be located between the first optical path conversion member L5 and the image sensor IS. The second lens group G2 may include at least one lens. For example, the second lens group G2 may include a sixth lens L6, a seventh lens L7, an eighth lens L8, and a ninth lens L9. The sixth lens L6, the seventh lens L7, the eighth lens L8, and the ninth lens L9 may be sequentially disposed in an optical axis direction or the second direction (Z-axis direction).

In addition, the second lens group G2 may be aligned or misaligned with the optical path as described above. In other words, the second lens group G2 may be positioned within or outside the optical path by various drivers. For example, the drivers may include an actuator (not shown). The actuator may be a voice coil motor, a micro-actuator, a silicone actuator, or the like, and any of various methods such as an electrostatic method, a thermal method, a bi-morph method, and an electrostatic force method may be applied to the actuator, but the present invention is not limited thereto.

The second lens group G2 may move in a direction perpendicular to the second direction (Z-axis direction). For example, the second lens group G2 may move in the first direction (X-axis direction). In addition, the second lens group G2 may move in a third direction (Y-axis direction). In this case, even when the second lens group G2 moves, a length of a camera module or the optical device may not increase in the first direction. In other words, even when the camera module or optical device performs a zooming or magnification function, a size or thickness thereof may be decreased. Accordingly, the optical device and the camera module according to the embodiment may have a compact structure while providing a high magnification function.

In addition, in the first lens group G1, an area of at least one lens may be greater than an area of the first optical path conversion member L5. For example, a length W1 of at least one lens of the first lens group G1 in the second direction (Z-axis direction) may be greater than a length W2 of the first optical path conversion member L5 in the second direction (Z-axis direction). For example, the length of at least one lens of the first lens L1, the second lens L2, the third lens L3, and the fourth lens L4 in the second direction (Z-axis direction) may be greater than the length W2 of the first optical path conversion member L5 in the second direction (Z-axis direction).

In addition, a length D1 of at least one lens of the first lens group G1 in the third direction (Y-axis direction) may be greater than a length of the first optical path conversion member L5 in the third direction (Y-axis direction). For example, the length of at least one lens of the first lens L1, the second lens L2, the third lens L3, and the fourth lens L4 in the third direction (Y-axis direction) may be greater than the length of the first optical path conversion member L5 in the third direction (Y-axis direction).

Due to this configuration, an F-number (Fno) of at least one lens of the first lens group G1 may be variously changed. In the embodiment, the Fno of at least one lens of the first lens group G1 may be easily decreased.

In addition, a shape of an edge of at least one lens of the first lens group G1 may be a circular shape. For example, at least a portion of the edge of at least one lens of the first lens group G1 may not have a flat shape in a direction perpendicular to the first direction. In other words, D-cut may not be applied to at least one lens of the first lens group G1.

Due to this configuration, the optical device and the camera module according to the embodiment can provide bright optical performance.

In addition, at least one of the first lens group G1 and the first optical path conversion member L5 may move or tilt in a direction perpendicular to the first direction (X-axis direction). For example, the first lens group G1 may be moved in the direction perpendicular to the first direction (X-axis direction). Alternatively, the first optical path conversion member L5 may tilt in the direction perpendicular to the first direction (X-axis direction). Accordingly, the first camera actuator 110 may easily perform an anti-shaking function.

In addition, as described above, the length W1 of the first lens group G1 in the second direction (Z-axis direction) may be greater than the length W2 of the first optical path conversion member L5 in the second direction (Z-axis direction).

In addition, a length W3 of the second lens group G2 in the second direction (Z-axis direction) may be greater than the length of the first optical path conversion member L5 in the second direction (Z-axis direction). In addition, the length W3 of the second lens group G2 in the second direction (Z-axis direction) may be smaller than or equal to the length W1 of the first lens group G1 in the second direction (Z-axis direction).

In addition, a ratio of a length WL of the optical device and the camera module in the second direction (Z-axis direction) to the sum of the length W1 of the first lens group G1 in the second direction (Z-axis direction) and the length W3 of the second lens group G2 in the second direction (Z-axis direction) may range from 1:0.8 to 1:0.95. Accordingly, the optical device and the camera module may have a structure which is compact and in which the image sensor is miniaturized.

In the embodiment, depending on an arrangement of the second lens group G2, the optical device may be in a tele or wide state. In the present specification, a first state may be wide (or a wide state), and a second state may be tele (or a tele state).

In addition, in the first state, the second lens group G2 may be disposed on the optical path. That is, in the first state, the second lens group G2 may overlap the first optical path conversion member L5 in the second direction (Z-axis direction) or optical axis direction.

In addition, in the first state, at least a portion of the second lens group G2 may overlap the first lens group G1. For example, in the first state, the second lens group G2 may have an overlap region OV overlapping the first lens group G1 in the first direction (X-axis direction). Due to this configuration, the optical device and the camera module may be miniaturized. In addition, zoom driving may be easily performed by one moving group.

In addition, in the second state, the second lens group G2 may not be disposed on the optical path. That is, in the second state, at least a portion of the second lens group G2 may not overlap the first optical path conversion member L5 in the second direction (Z-axis direction) or optical axis direction. Alternatively, the first lens group G1 may overlap the second lens group G2 in a second optical axis direction or the second direction (Z-axis direction). This case may be a case in which the second lens group G2 moves upward or moves in a first optical axis direction.

However, in the second state, a portion of an edge region of the second lens group G2 may overlap the first optical path conversion member L5 in the second direction (Z-axis direction). Accordingly, the camera module may have a compact structure while performing a magnification function.

For example, the cover CV may have a structure protruding toward one side to allow the second lens group G2 to be aligned or misaligned therewith. In addition, the second lens group G2 may also have a structure partially protruding from the first lens group G1 in the second direction in the second state. A length D3 of the protruding structure in the second direction (Y-axis direction) may be smaller than a length D2 of the second lens group G2 in the second direction (Y-axis direction). Accordingly, the optical device and the camera module may provide improved space efficiency. In addition, the length D1 of the first lens group G1 in the second direction may be greater than the length D2 of the second lens group G2 in the second direction (Y-axis direction). Accordingly, as described above, the optical device may provide very bright optical performance.

In addition, a length 11 of the first lens group G1 in the first direction (X-axis direction) may be smaller than a length l2 of the first optical path conversion member L5 in the first direction (X-axis direction). Accordingly, bright light can be provided while a thickness of the optical device and the camera module is minimized.

In addition, the length of the second lens group G2 in the first direction may be smaller than or equal to the length l2 of the first optical path conversion member L5 in the first direction (X-axis direction).

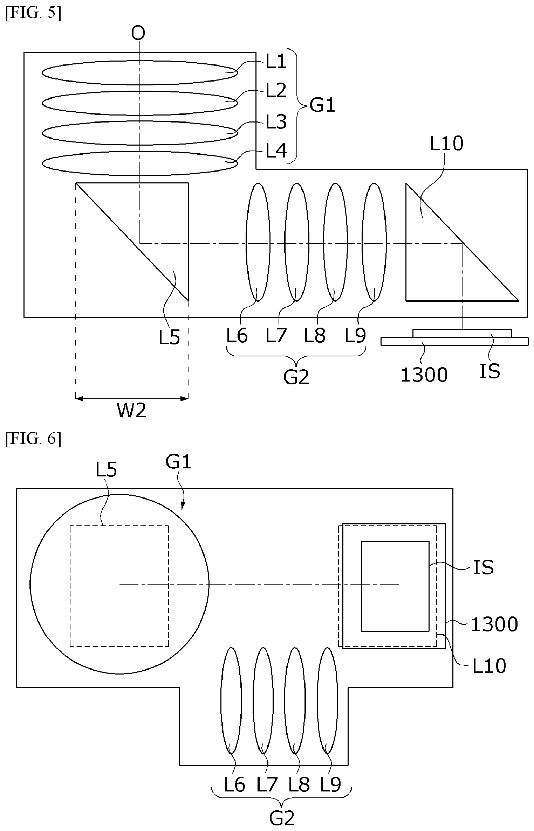

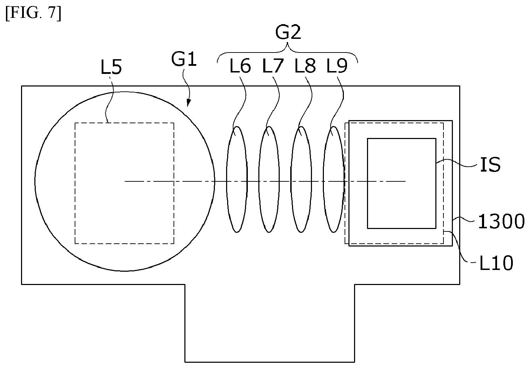

FIG. 5 is a conceptual view illustrating an optical device according to a second embodiment, FIG. 6 is a top view illustrating the optical device in a second state according to the second embodiment, and FIG. 7 is a top view illustrating the optical device in a first state according to the second embodiment.

Referring to FIGS. 5 to 7, the optical device according to the second embodiment may include a first lens group G1, a first optical path conversion member L5, a second lens group G2, and a second optical path conversion member L10.

In addition, the optical device according to the second embodiment may further include an image sensor IS and a circuit board 1300. In this case, the image sensor IS may be disposed on an optical path and may receive light. In addition, the image sensor IS may convert the received light into an electric signal and transmit the electric signal to the outside through the circuit board and the like.

In addition, the optical device according to the second embodiment may include a first camera actuator, a second camera actuator, etc. For example, the first camera actuator may include the first lens group G1 and the first optical path conversion member L5. In addition, the second camera actuator may include the second lens group G2. In addition, the second camera actuator may also include the second optical path conversion member L10. Hereinafter, the optical device according to the present embodiment will be described based on the first lens group G1, the first' optical path conversion member L5, the second lens group G2, and the image sensor IS.

First, in the optical device according to the embodiment, the first optical path conversion member L5 may change an optical path of incident light incident from an object side in a first direction (X-axis direction) to an optical path in a second direction. The first reflection member L5 may be called a "fifth lens"

Accordingly, light may be incident on the first optical path conversion member L5 in the first direction (X-axis direction), and then the light may be reflected thereby and emitted in the second direction (Z-axis direction). To this end, the first optical path conversion member L5 may include a prism, a reflection mirror, etc.

The first lens group G1 may be located between the first optical path conversion member L5 and the object side. Alternatively, the first lens group G10 may be located in front of the first optical path conversion member L5. In the present specification, "in front of" and "forward" mean a direction of the object side on the optical path. In addition, "behind" and "rearward" mean a direction opposite to the direction of the object side or mean a direction toward the image sensor on the optical path.

The first lens group G1 may be located at an object side of the first optical path conversion member L5 and may include at least one lens.

For example, the first lens group G1 may include a first lens L1, a second lens L2, a third lens L3, and a fourth lens L4 on the optical path. The first lens L1, the second lens L2, the third lens L3, and the fourth lens L4 may be sequentially disposed from the object side toward an image side (corresponding to the image sensor).

In addition, the first lens L1, the second lens L2, the third lens L3, and the fourth lens L4 may be disposed above the first optical path conversion member L5.

The second lens group G2 may be located between the first optical path conversion member L5 and the image sensor IS. The second lens group G2 may include at least one lens. For example, the second lens group G2 may include a sixth lens L6, a seventh lens L7, an eighth lens L8, and a ninth lens L9. The sixth lens L6, the seventh lens L7, the eighth lens L8, and the ninth lens L9 may be sequentially disposed in an optical axis direction or the second direction (Z-axis direction).

In addition, the second lens group G2 may be aligned or misaligned with the optical path as described above. In other words, the second lens group G2 may be positioned within or outside the optical path by various drivers. For example, the drivers may include an actuator (not shown). The actuator may be a voice coil motor, a micro-actuator, a silicone actuator, or the like, and any of various methods such as an electrostatic method, a thermal method, a bi-morph method, and an electrostatic force method may be applied to the actuator, but the present invention is not limited thereto.

The second lens group G2 may move in a direction perpendicular to the second direction (Z-axis direction). For example, the second lens group G2 may move in the first direction (X-axis direction). In addition, the second lens group G2 may move in a third direction (Y-axis direction). In this case, even when the second lens group G2 moves, a length of a camera module or the optical device may not increase in the first direction. In other words, even when the camera module or optical device performs a zooming or magnification function, a size or thickness thereof may be decreased. Accordingly, the optical device and the camera module according to the embodiment may have a compact structure while providing a high magnification function.

In addition, in the first lens group G1, an area of at least one lens may be greater than an area of the first optical path conversion member L5. For example, a length W1 of at least one lens of the first lens group G1 in the second direction (Z-axis direction) may be greater than a length W2 of the first optical path conversion member L5 in the second direction (Z-axis direction). For example, the length of at least one lens of the first lens L1, the second lens L2, the third lens L3, and the fourth lens L4 in the second direction (Z-axis direction) may be greater than the length W2 of the first optical path conversion member L5 in the second direction (Z-axis direction).

In addition, a length D1 of at least one lens of the first lens group G1 in the third direction (Y-axis direction) may be greater than a length of the first optical path conversion member L5 in the third direction (Y-axis direction). For example, the length of at least one lens of the first lens L1, the second lens L2, the third lens L3, and the fourth lens L4 in the third direction (Y-axis direction) may be greater than the length of the first optical path conversion member L5 in the third direction (Y-axis direction).

Due to this configuration, an Fno of at least one lens of the first lens group G1 may be variously changed. In the embodiment, the Fno of at least one lens of the first lens group G1 may be easily decreased.

In addition, a shape of an edge of at least one lens of the first lens group G1 may be a circular shape. For example, at least a portion of the edge of at least one lens of the first lens group G1 may not have a flat shape in a direction perpendicular to the first direction. In other words, D-cut may not be applied to at least one lens of the first lens group G1.

Due to this configuration, the optical device and the camera module according to the embodiment can provide bright optical performance.

In addition, at least one of the first lens group G1 and the first optical path conversion member L5 may move or tilt in a direction perpendicular to the first direction (X-axis direction). For example, the first lens group G1 may be moved in the direction perpendicular to the first direction (X-axis direction). Alternatively, the first optical path conversion member L5 may tilt in the direction perpendicular to the first direction (X-axis direction). Accordingly, the first camera actuator 110 may easily perform an anti-shaking function.

In addition, as described above, the length W1 of the first lens group G1 in the second direction (Z-axis direction) may be greater than the length W2 of the first optical path conversion member L5 in the second direction (Z-axis direction).

In addition, a length W3 of the second lens group G2 in the second direction (Z-axis direction) may be greater than the length of the first optical path conversion member L5 in the second direction (Z-axis direction). In addition, the length W3 of the second lens group G2 in the second direction (Z-axis direction) may be smaller than or equal to the length W1 of the first lens group G1 in the second direction (Z-axis direction).

In addition, a ratio of a length WL of the optical device and the camera module in the second direction (Z-axis direction) to the sum of the length W1 of the first lens group G1 in the second direction (Z-axis direction) and the length W3 of the second lens group G2 in the second direction (Z-axis direction) may range from 1:0.8 to 1:0.95. Accordingly, the optical device and the camera module may have a structure which is compact and in which the image sensor is miniaturized.

In the embodiment, depending on an arrangement of the second lens group G2, the optical device may be in a tele or wide state. In the present specification, a first state may be a wide state, and a second state may be a tele state.

In addition, in the first state, the second lens group G2 may be disposed on the optical path. That is, in the first state, the second lens group G2 may overlap the first optical path conversion member L5 in the second direction (Z-axis direction) or optical axis direction.

In addition, in the first state, at least a portion of the second lens group G2 may overlap the first lens group G1. For example, in the first state, the second lens group G2 may have an overlap region OV overlapping the first lens group G1 in the first direction (X-axis direction). Due to this configuration, the optical device and the camera module may be miniaturized. In addition, zoom driving may be easily performed by one moving group.

In addition, in the second state, the second lens group G2 may not be disposed on the optical path. That is, in the second state, at least a portion of the second lens group G2 may not overlap the first optical path conversion member L5 in the second direction (Z-axis direction) or optical axis direction.

However, in the second state, a portion of an edge region of the second lens group G2 may overlap the first optical path conversion member L5 in the second direction (Z-axis direction). Accordingly, the camera module may have a compact structure while performing a magnification function.

For example, the cover CV may have a structure protruding toward one side to allow the second lens group G2 to be aligned or misaligned therewith. In addition, the second lens group G2 may also have a structure partially protruding from the first lens group G1 in the second direction in the second state. A length D3 of the protruding structure in the second direction (Y-axis direction) may be smaller than a length D2 of the second lens group G2 in the second direction (Y-axis direction). Accordingly, the optical device and the camera module may provide improved space efficiency. In addition, the length D1 of the first lens group G1 in the second direction may be greater than the length D2 of the second lens group G2 in the second direction (Y-axis direction). Accordingly, as described above, the optical device may provide very bright optical performance.

In addition, a length 11 of the first lens group G1 in the first direction (X-axis direction) may be smaller than a length l2 of the first optical path conversion member L5 in the first direction (X-axis direction). Accordingly, bright light can be provided while a thickness of the optical device and the camera module is minimized.

In addition, the length of the second lens group G2 in the first direction may be smaller than or equal to the length l2 of the first optical path conversion member L5 in the first direction (X-axis direction).

The content regarding the optical device according to the first embodiment described above may be equally applied to descriptions of the first lens group G1, the first optical path conversion member L5, and the second lens group G2.

In addition, the optical device according to the second embodiment may further include the second optical path conversion member L10 disposed between the second lens group G2 and the image sensor IS.

The second optical path conversion member L10 may change the optical path of incident light incident in the second direction (Z-axis direction) to an optical path in a direction (for example, the first direction (X-axis direction)) perpendicular to the second direction. The second optical path conversion member L10 may be called a "tenth lens."

Accordingly, light may be incident on the second optical path conversion member L10 in the second direction (Z-axis direction), and then the light may be reflected thereby and emitted in the first direction (X-axis direction). To this end, the first optical path conversion member L5 may include a prism, a reflection mirror, etc. In addition, the image sensor IS may be miniaturized due to reflection of the second optical path conversion member L10.

In addition, in the optical device according to the first embodiment and the second embodiment, the first lens group G1, the first optical path conversion member L5, the second lens group G2, and the second optical path conversion member L10 may move integrally. Accordingly, an AF function may be performed.

In addition, a degree of location freedom of the image sensor IS or a degree of freedom of an electronic device may be improved due to the second optical path conversion member L10.

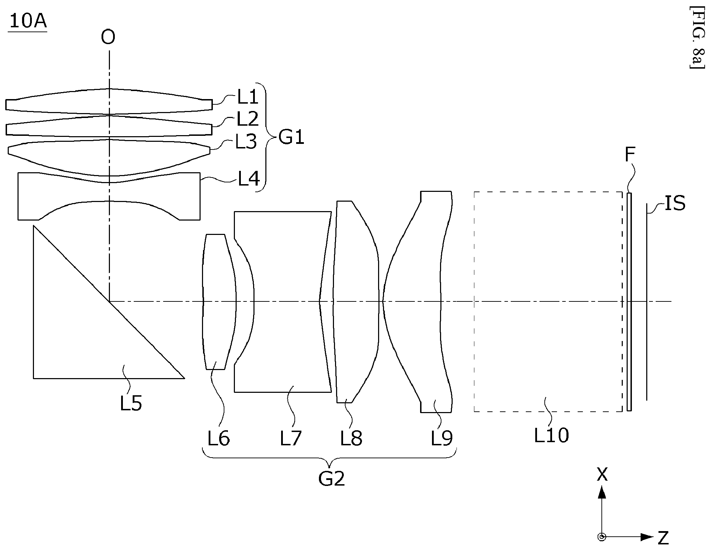

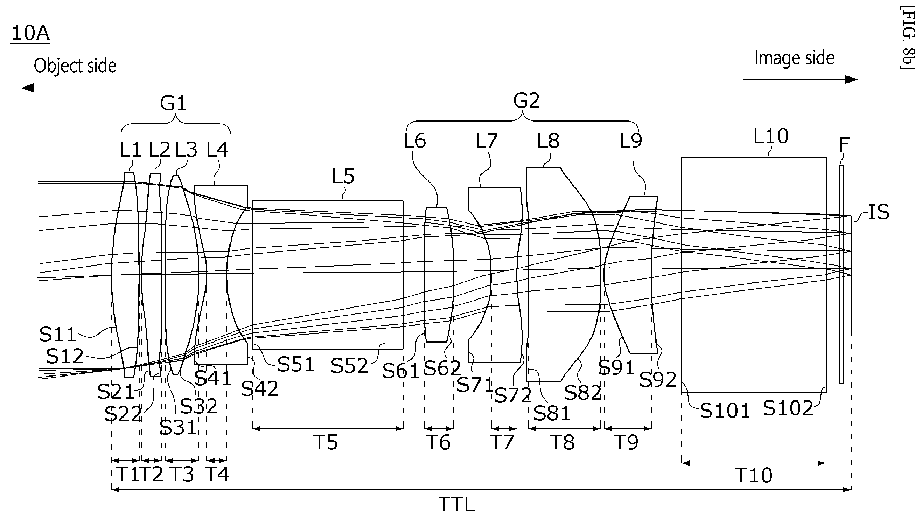

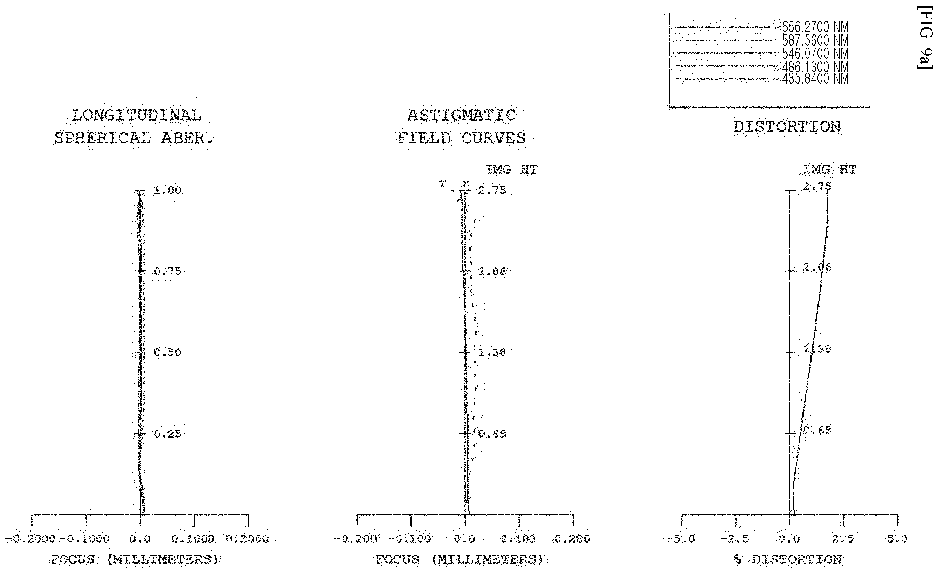

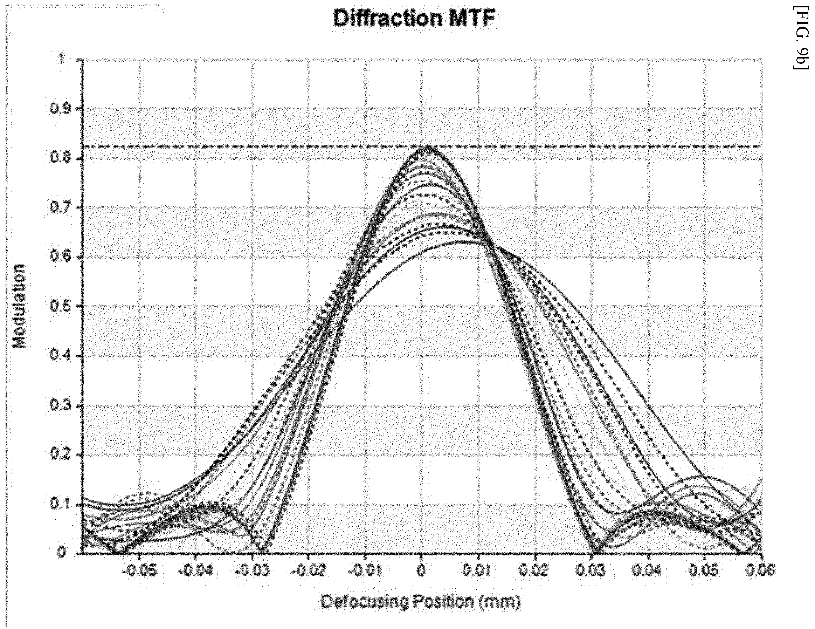

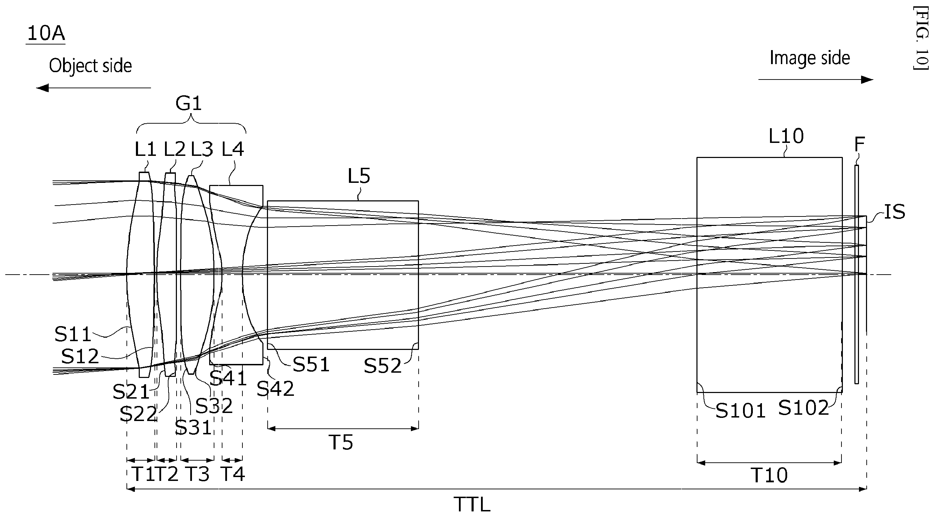

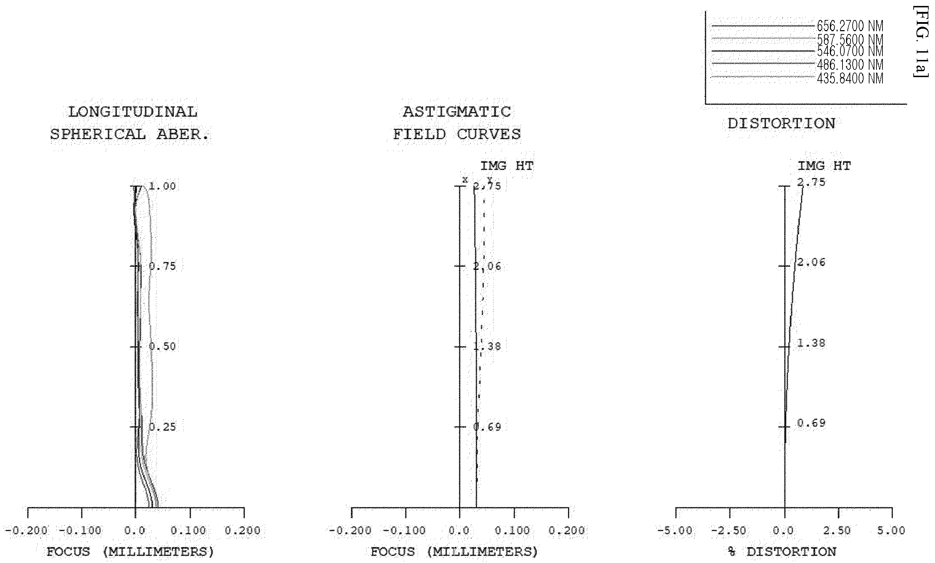

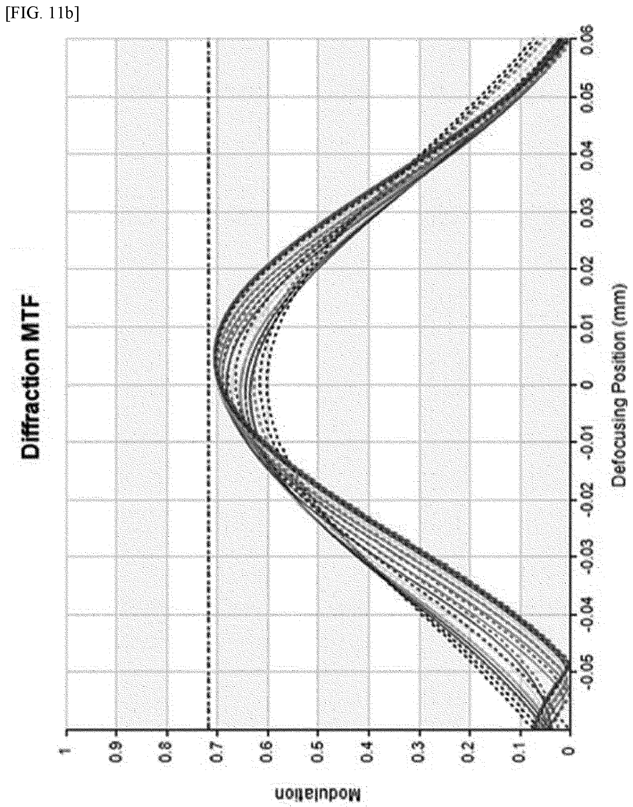

FIG. 8A is a conceptual view illustrating an optical system according to a first embodiment, and FIG. 8B is a cross-sectional view illustrating the optical system in a wide state according to the first embodiment. FIG. 9A is a graph showing longitudinal spherical aberrations, astigmatic field curves, and distortion of light of wavelengths of 435 nm, 486 nm, 546 nm, 587 nm, and 656 nm in the optical system in the wide state according to the first embodiment, and FIG. 9B is a graph showing a diffraction modulation transfer function (MTF) in the optical system in the wide state according to the first embodiment. FIG. 10 is a cross-sectional view illustrating the optical system in a tele state according to the first embodiment. FIG. 11A is a graph showing longitudinal spherical aberrations, astigmatic field curves, and distortion of light of wavelengths of 435 nm, 486 nm, 546 nm, 587 nm, and 656 nm in the optical system in the tele state according to the first embodiment, and FIG. 11B is a graph showing a diffraction MTF in the optical system in the tele state according to the first embodiment.

Referring to FIG. 8A, a first lens group G1 may be located above a first optical path conversion member L5 as described above. In addition, a second optical path conversion member L10 may be present or may not be present as in the first and second embodiments.

The first optical path conversion member L5 changes an optical path, and the second optical path conversion member L10 also changes the optical path. When these are considered and the optical performance is determined, as in FIGS. 8B to 19, the first optical path conversion member L5 and the second optical path conversion member L10 correspond to members which do not have curvature. In addition, hereinafter, a case in which light passes through the first optical path conversion member L5 and the second optical path conversion member L10 without being reflected thereby will be illustrated. However, even when it is illustrated that the light passes through the first optical path conversion member L5 and the second optical path conversion member L10, it should be understood that the first optical path conversion member L5 and the second optical path conversion member L10 actually change the optical path as described above.

In addition, the optical system may include the first lens group G1, the first optical path conversion member L5, a second lens group G2, the second optical path conversion member L10, and an image sensor IS, which have been described above. In addition, the optical system may further include a filter F disposed between the second optical path conversion member L10 and the image sensor IS. The filter F may be formed of glass or the like. In addition, the filter F may allow light of specific wavelengths to pass therethrough or block light of specific wavelengths. In addition, the filter F may prevent foreign matter from being introduced to the image sensor IS. Accordingly, the optical device may include some or all of various optical systems described below. In addition, a camera module may also include any of the various optical systems described below. Hereinafter, the optical system of FIGS. 8B to 19 will be described based on the above components.

Referring to FIG. 8B, an optical system 10A according to the first embodiment includes the first lens group G1, the first optical path conversion member L5, the second lens group G2, and the second optical path conversion member L10 which are sequentially disposed from an object side toward an image side.

Hereinafter, the first optical path conversion member L5 will be described as a fifth lens L5. In addition, the fifth lens L5 may include a prism. In addition, hereinafter, the second optical path conversion member L10 will be described as a tenth lens L10. In addition, the tenth lens L10 may include a prism.

According to the embodiment of the present invention, the first lens group G1 may include at least one lens. In the embodiment, the first lens group G1 may include a first lens L1, a second lens L2, a third lens L3, and a fourth lens L4 which are sequentially disposed on the optical path.

The second lens group G2 may include at least one lens. In the embodiment, the second lens group G2 may include a sixth lens L6, a seventh lens L7, an eighth lens L8, and a ninth lens L9. As described above, as the second lens group G2 is aligned or misaligned therewith, zooming driving may be performed. Accordingly, the first lens group G1 may be fixed regardless of the zooming driving.

In addition, as the second lens group G2 moves, zooming of the optical system 10A may be changed between magnifications of one and ten. For example, in a wide state, the optical system may provide a magnification of one. In addition, in a tele state, the optical system may provide a magnification of five.

According to the embodiment of the present invention, the first lens group G1 may include a plurality of lenses having different refracting forces. A lens disposed at the image side among the plurality of lenses included in the first lens group G1 may have a positive (+) refracting force. A lens disposed at the object side among the plurality of lenses included in the first lens group G1 may have a negative (-) refracting force.

According to the embodiment, the first lens group G1 may include the first lens L1, the second lens L2, the third lens L3, and the fourth lens L4 sequentially disposed from the object side toward the image side. Among them, the first lens L1 may have a positive refracting force, and the second lens L2 may have a positive refracting force. The third lens L3 may have a positive refracting force. In addition, the fourth lens L4 may have a negative refracting force.

According to the embodiment of the present invention, the second lens group G2 may include a plurality of lenses having different refracting forces. A lens disposed at the image side among the plurality of lenses included in the second lens group G2 may have a positive (+) refracting force. A lens disposed at the object side among the plurality of lenses included in the second lens group G2 may have a positive (+) refracting force.

According to the embodiment, the second lens group G2 may include the sixth lens L6, the seventh lens L7, the eighth lens L8, and the ninth lens L9 sequentially disposed from the object side toward the image side. Among them, the sixth lens L6 may have a positive refracting force, and the seventh lens L7 may have a negative refracting force. The eighth lens L8 may have a negative refracting force. In addition, the ninth lens L9 may have a positive refracting force.

In addition, each of the lenses included in the first lens group G1 and the second lens group G2 may be formed of a plastic or glass material.

Tables 1 and 2 below show optical properties of the lenses included in the optical system according to the embodiment of the present invention, and Tables 3 and 4 show Koenig constants and aspheric coefficients of the lenses of the optical system according to the embodiment of the present invention.

**[Table 1]**

| Lens No. | Lens surface No. | Nd/Vd | Radius (R, mm) | Thickness (mm) | Refractive index | Effective diameter (CA) |
|---|---|---|---|---|---|---|
| First lens | S11 | 5348.557 | 8.029 | 0.769 | 1.535 | 5.22 |
| | S12 | | -89.733 | 0.050 | | 5.221912 |
| Second lens | S21 | 549768.3827 | 7.130 | 0.562 | 1.550 | 5.187772 |
| | S22 | | 43.751 | 0.100 | | 5.153716 |
| Third lens | S31 | 5348.557 | 14.713 | 0.937 | 1.535 | 5.106544 |
| | S32 | | -6.326 | 0.206 | | 5.011248 |
| Fourth lens | S41 | 538731.3451 | -2.653 | 0.595 | 1.539 | 4.632361 |
| | S42 | | 12.034 | 0.671 | | 3.9 |
| Fifth lens | S51 | 717361.2951 | 1.00E+18 | 4.200 | 1.717 | 3.867896 |
| | S52 | | 1.00E+18 | 0.576 | | 3.489905 |
| Sixth lens | S61 | 6714.1923 | -838.815 | 0.840 | 1.678 | 3.405489 |
| | S62 | | -6.092 | 1.015 | | 3.3 |
| Seventh lens | S71 | 631487.2387 | -4.491 | 0.697 | 1.631 | 3.359425 |
| | S72 | | 3.515 | 0.328 | | 4.560555 |
| Eighth lens | S81 | 5348.557 | 355.941 | 1.985 | 1.535 | 4.74 |
| | S82 | | 83.818 | 0.110 | | 5.112544 |
| Ninth lens | S91 | 5348.557 | 2.086 | 1.318 | 1.535 | 5.59915 |
| | S92 | | -1,030.109 | 0.829 | | 5.580744 |
| Tenth lens | S101 | 717361.2951 | 1.00E+18 | 4.000 | 1.717 | 5.567085 |
| | S102 | | 1.00E+18 | 0.368 | | 5.514377 |
| Filter | F1 | 523.5447 | 1.00E+18 | 0.110 | - | 5.511054 |
| | F2 | | 1.00E+18 | 0.223 | - | 5.509456 |
| Sensor | IS | | 1.00E+18 | - | - | 5.505036 |

An object side surface denotes a thickness of a lens, and an image side surface denotes a distance from a next member. In addition, Nd is a refractive index, and Vd is an Abbe number (dispersion). These may apply equally below.

**[Table 2]**

| Lens No. | Lens surface No. | Abbe number | Shape | Semi-aperture |
|---|---|---|---|---|
| First lens | S11 | 55.708 | Convex | 2.610 |
| | S12 | | Concave | 2.597 |
| Second lens | S21 | 38.270 | Convex | 2.541 |
| | S22 | | Convex | 2.508 |
| Third lens | S31 | 55.708 | Convex | 2.469 |
| | S32 | | Concave | 2.404 |
| Fourth lens | S41 | 34.508 | Concave | 2.223 |
| | S42 | | Convex | 1.950 |
| Fifth lens | S51 | 29.510 | - | 1.781 |
| | S52 | | - | 1.538 |
| Sixth lens | S61 | 19.238 | Concave | 1.591 |
| | S62 | | Concave | 1.650 |
| Seventh lens | S71 | 23.875 | Concave | 1.730 |
| | S72 | | Convex | 2.223 |
| Eighth lens | S81 | 55.708 | Convex | 2.316 |
| | S82 | | Convex | 2.722 |
| Ninth lens | S91 | 55.708 | Convex | 2.800 |
| | S92 | | Concave | 2.800 |
| Tenth lens | S101 | 29.510 | | 3.000 |
| | S102 | | | 2.805 |
| Filter | F1 | - | - | 2.775 |
| | F2 | | | 2.769 |
| Sensor | IS | - | - | 2.751 |

**[Table 3]**

| Lens surface No. | Koenig constant (K) | A | B | C | D |
|---|---|---|---|---|---|
| S11 | -6.39213 | -0.00158 | 0.000222 | 0.000142 | -7.2E-05 |
| S12 | 416.978 | -0.00959 | 0.003642 | -0.00068 | 0.000069 |
| S21 | -10.347 | -0.00175 | 0.000361 | -0.00088 | 0.000397 |
| S22 | -5379.2 | -0.00292 | -0.00343 | 0.002079 | -0.00058 |
| S31 | -179.203 | -0.01144 | 0.002451 | 0.001245 | -0.00075 |
| S32 | -79.2047 | -0.04208 | 0.026544 | -0.0109 | 0.002919 |
| S41 | -11.362 | 0.004782 | 0.006908 | --0.00481 | 0.001677 |
| S42 | 20.4205 | 0.064736 | -0.02666 | 0.009745 | -0.00291 |
| S51 | - | - | - | - | - |
| S52 | - | - | - | - | - |
| S61 | -90264.1 | -4.5E-05 | 0.003653 | -0.00159 | 0.000708 |
| S62 | -3.89968 | -0.00427 | 0.007288 | -0.00265 | 0.000746 |
| S71 | 2.8173 | -0.08871 | 0.069897 | -0.03116 | 0.008532 |
| S72 | -21.7885 | -0.03443 | 0.012386 | -0.00126 | -0.00067 |
| S81 | 4477.48 | 0.029072 | -0.03552 | 0.017632 | -0.0051 |
| S82 | -32772 | -0.02317 | -0.0098 | 0.005784 | -0.00151 |
| S91 | -3.67525 | 0.008651 | -0.00609 | 0.001596 | -0.00036 |
| S92 | -8.41E+50 | 0.022077 | -0.00147 | -0.00281 | 0.00121 |
| S101 | - | - | - | - | - |
| S102 | - | - | - | - | - |

**[Table 4]**

| Lens surface No. | E | F | G | H | J |
|---|---|---|---|---|---|
| S11 | 0.000016 | -2E-06 | 1.63E-07 | -6.52E-09 | 1.04E-10 |
| S12 | -5E-06 | 2.09E-07 | -6.39E-09 | 1.12E-10 | -8.42E-13 |
| S21 | -9.7E-05 | 0.000014 | -1E-06 | 5.30E-08 | -9.65E-10 |
| S22 | 0.000095 | -9E-06 | 0.000001 | -1.62E-08 | 2.01E-10 |
| S31 | 0.000176 | -2.2E-05 | 0.000002 | -5.89E-08 | 9.08E-10 |
| S32 | -0.00052 | 0.000063 | -5E-06 | 2.17E-07 | -4.20E-09 |
| S41 | -0.00036 | 0.000049 | -4E-06 | 2.24E-07 | -5.00E-09 |
| S42 | 0.000657 | -0.00011 | 0.000011 | -1E-06 | 1.89E-08 |
| S51 | - | - | - | - | - |
| S52 | - | - | - | - | - |
| S61 | -0.00025 | 0.000061 | -9E-06 | 0.000001 | -1.83E-08 |
| S62 | -0.0002 | 0.000045 | -7E-06 | 0.000001 | -1.95E-08 |
| S71 | -0.0015 | 0.00017 | -1.2E-05 | 4.66E-07 | -7.72E-09 |
| S72 | 0.000264 | -4.1E-05 | 0.000003 | -1.42E-07 | 2.44E-09 |
| S81 | 0.000914 | -0.0001 | 0.000007 | -2.38E-07 | 3.56E-09 |
| S82 | 0.000242 | -2.4E-05 | 0.000002 | -5.50E-08 | 1.01E-09 |
| S91 | 0.000082 | -1.4E-05 | 0.000002 | -8.74E-08 | 2.13E-09 |
| S92 | -0.00025 | 0.000032 | -2E-06 | 1.01E-07 | -1.81E-09 |
| S101 | - | - | - | - | - |
| S102 | - | - | - | - | - |

In Table 1, a unit of a thickness is [mm]. In Table 1 and the like, central thicknesses [mm] of lenses, distances [mm] between lenses, curvatures, refractive indexes, and Abbe numbers of lenses are shown. In addition, a unit of a general distance described in the specification is [mm]. In addition, in a process of zooming in the tele state, since the second lens group G2 is misaligned, the sixth to ninth lens are removed. In addition, properties of the removed sixth to ninth lenses may be changed. However, the descriptions of the first to fifth lenses may be the same. In addition, since the sixth to ninth lenses are removed, a thickness written to correspond to an image side surface of the fifth lens is a distance between the fifth lens and the ninth lens, which is not a distance between the fifth lens and the sixth lens. Referring to Table 2, each surface of the first to fourth lenses and the sixth to ninth lenses may be formed in a convex or concave shape.

The first lens L1 may be a lens whose object side surface S11 is convex toward the object side. The first lens L1 may be the lens whose image side surface S12 is convex toward the object side. In other words, the object side surface S11 of the first lens L1 may be concave toward the image side. In addition, the image side surface S12 of the first lens L1 may be concave toward the image side.

The second lens L2 may be a lens whose object side surface L21 is convex toward the object side. The second lens L2 may be the lens whose image side surface L22 is concave toward the object side. "Convex" and "Concave" written in Table 2 are written based on the object side.

In addition, as in the drawings, a thickness T1 of the first lens L1 may correspond to a thickness written to correspond to the object side surface S11 of the first lens L1 in Table 1. In addition, a thickness T2 of the second lens L2 may correspond to a thickness written to correspond to the object side surface S21 of the second lens L2 in Table 1. A thickness T3 of the third lens L3 may correspond to a thickness written to correspond to an object side surface S31 of the third lens L3 in Table 1. A thickness T4 of the fourth lens L4 may correspond to a thickness written to correspond to an object side surface S41 of the fourth lens L4 in Table 1. A thickness T6 of the sixth lens L6 may correspond to a thickness written to correspond to an object side surface S61 of the sixth lens L6 in Table 1. A thickness T7 of the seventh lens L7 may correspond to a thickness written to correspond to an object side surface S71 of the seventh lens L7 in Table 1. A thickness T8 of the eighth lens L8 may correspond to a thickness written to correspond to an object side surface S81 of the eighth lens L8 in Table 1. A thickness T9 of the ninth lens L9 may correspond to a thickness written to correspond to an object side surface S91 of the ninth lens L9 in Table 1.

**[Table 5]**

| Items | One embodiment |
|---|---|
| TTL | 20.488 |
| | |
| EFL | 11.890 |
| BFL | 5.529 |
| ImgH | 2.750 |
| f1 | 13.758 |
| f2 | 15.315 |
| f3 | 8.367 |
| f4 | -3.951 |
| f6 | 9.027 |
| f7 | -2.991 |
| f8 | -204.646 |
| f9 | 3.878 |
| Fno f# | 2.278 |
| FOV | 12.902 |

**[Table 6]**

| Expression NO. | Expression | Value | Effect |
|---|---|---|---|
| 1 | 2 < L#_CT / L#_CT < 5 | 0.821 | Reduces aberration of optical system |
| 2 | 0.5 < L#_CT / L#_ET < 2 | 2.572 | Affects reduction of chromatic aberration |
| 3 | 1.6 < n3 | 1.535 | Factor affecting reduction of chromatic aberration |
| 4 | 1 < d#1#2_CT / d#1#2_min < 40 | 1.385 | Affects reduction of distortion, image quality of periphery |
| 5 | 1 < d#1#2_CT / d#1#2_ET < 5 | 1.000 | Improves distortion and aberration properties of periphery of field of view |
| 6 | 0.01 < d#1#2_CT / d#3#4_CT < 1 | 0.136 | Improves aberration property and affects reduction of optical system |
| 7 | 0 < d#1#2_CT - d#1#2_ET / d#1#2_CT < 2 | 0.869 | Affects reduction of distortion |
| 8 | 1 < CA _L#1S# / CA _L#2S# < 1.5 | 1.027 | Affects reduction of aberration of optical system |
| 9 | 1 < CA_L3S2 / CA_L4S1 < 1.5 | 1.081 | Improves chromatic aberration property, vignetting |
| 10 | 1 < d34_CT / d34_ET < 8 | 0.622 | Affects reduction of chromatic aberration and reduction of aberration |
| 11 | 3 < d910_CT / d910_ET < 10 | 1.948 | Improves distortion of periphery of field of view and aberration properties |
| 12 | 0 < L_CT_Max / Air_Max < 2 | 4.136 | Good optical performance at set field of view and focal length, TTL reduction |
| 13 | 1 < ∑/ ∑< | 3.739 | Good optical performance at set field of view and focal length, TTL reduction |
| 14 | 10 < ∑<30 | 15.971 | TTL controlled with improved resolution |
| 15 | 10<∑/∑ | 24.903 | Improved aberration property and resolution |
| 16 | 0 < \|Max_distoriton\| < 5 | 1.738 | Improves distortion property |
| 17 | 0 < Air_Edge _Max / L_CT_Max < 2 | 0.498 | Set field of view and focal length, good performance at periphery of field of view |
| 18 | 1 < CA_max / CA_Aver < 3 | 1.427 | Gives optical system proper size for slim and compact structure |
| 19 | 0.1 < CA_min / CA_Aver < 1 | 0.000 | Gives optical system proper size for slim and compact structure |
| 20 | 0.1 < CA_max / 2*ImgH < 1 | 1.091 | Good optical performance, gives optical system proper size for slim and compact structure |
| 21 | 0.5 < TD / CA_max < 1.5 | 3.298 | Gives optical system proper size for slim and compact structure |
| 22 | 1<F/L1R1<10 | 1.481 | Affects optical system TTL |
| 23 | 0.5 < EPD / L1R1 < 8 | 0.650 | Incident light control |
| 24 | -3 < f#1 / f#2 < 0 | 1.644 | Controls refracting forces of L1 and L3 to affect resolution improvement |
| 25 | 1 < f#1#2 / F < 5 | 0.000 | TTL length control |
| 26 | 2 < TTL < 20 | 20.488 | |
| 27 | 2 < ImgH | 2.750 | |
| 28 | BFL < 2.5 | 5.529 | |
| 29 | 2 < F < 20 | 11.890 | |
| 30 | FOV < 120 | 12.902 | |
| 31 | 0.5 < TTL / CA_max < 2 | 3.415 | Gives optical system proper size for slim and compact structure |
| 32 | 0.5 < TTL / ImgH < 3 | 7.450 | Image sensor of about one inch applied to secure BFL, small TTL |
| 33 | 0.1 < BFL / ImgH < 0.5 | 2.011 | Image sensor of about one inch applied to secure BFL, improves central portion and periphery of field of view |
| 34 | 4 < TTL / BFL < 10 | 3.705 | Secures BFL, slim and compact |
| 35 | 0.5 < F / TTL < 1.5 | 0.580 | Slim and compact |
| 36 | 3 < F / BFL < 10 | 2.150 | Reduces BFL to give good properties of periphery of field of view |
| 37 | 1 < F / ImgH < 3 | 4.324 | Image sensor of about one inch applied, improves aberration property |
| 38 | 1 < F / EPD < 5 | 2.278 | Affects overall brightness of optical system (F#) |

Table 5 relates to a total track length (TTL), an effective focal length (EFL), a back focus length (BFL), a focal length of a lens, and the like of the optical system. In addition, an Fno of a total lens part is 2 or more, for example, 2.275. A field of view (FOV) viewed from the camera module may be 20° or less, for example, may range from 8° to 15°. In this case, an FOV viewed from the camera module denotes a half FOV. Accordingly, the FOV viewed from the camera module may be 1/2 of the FOV of the camera module. Table 6 shows result values of the above-described expressions in the optical system of the embodiment. Referring to Table 6, it can be seen that the optical system according to one embodiment satisfies at least one or two or more of expressions 1 to 38.

In addition, ET is an edge thickness and denotes a thickness of an edge of a lens. nx denotes a refractive index of x^{th} lens.

CA_L#1S# denotes an effective diameter of the object side surface of the first lens, and CA L#2S# denotes an effective diameter of the object side surface of the second lens. CA_L3S2 is an effective diameter of an image side surface of the third lens, and CA_L4S1 denotes an effective diameter of the object side surface of the fourth lens. d34_CT is a center (optical axis) distance between the third lens and the fourth lens, and d34_ET is an edge distance between the third lens and the fourth lens. D910_CT is a center (optical axis) distance between the ninth lens and the tenth lens, and D910_ET is an edge distance between the ninth lens and the tenth lens. L_CT_Max is a maximum thickness of a lens, and Air_Max is a maximum distance between lenses. ΣL_CT is the sum of thicknesses of lenses, and ΣAir_CT is the sum of separation distances of lenses. ΣIndex is the sum of refractive indexes. ΣAbb is a total sum of Abbe numbers of lenses. Air_Edge_Max is a maximum value of a separation distance between edges of lenses, and L_CT_Max is a maximum thickness of a lens. CA_max is a maximum value of an effective diameter, and CA_Aver is an average value of an effective diameter. CA_min is a minimum value of an effective diameter. TD is a distance from the object side surface of the first lens to an image side surface of the tenth lens. F is an EFL, and L1R1 is a radius of the object side surface of the first lens. f#number denotes a focal length of a number lens.

In addition, in the tele state of the optical system according to the embodiment, Fno may be smaller than 3.8. That is, the optical system may provide bright light.

In addition, in at least one state of the tele state and the wide state, a ratio f/Fno of a focal length to an Fno may range from 5 to 7. In this case, f may correspond to an EFL. Due to this configuration, an Fno (or F#) which is low compared to a focal length may be provided.

In addition, a distance between the first lens group G1 and the second lens group G2 may be 5 mm or more. Accordingly, a space for the fifth lens or the first optical path conversion member may be sufficiently secured. In addition, in the wide state, a distance between the image side surface of the outermost side lens of the second lens group and the image sensor may be 5 mm or more. Accordingly, sufficient space for the second optical path conversion member or the tenth lens for changing the optical path may be secured. In addition, the optical system may secure the space and provide a zooming function even without an additional driver which moves a moving group along the optical path.

In addition, in the present embodiment, an EFL is 11.9 in the wide state and 19.4 in the tele state. An Fno is 2.27 in the wide state and 3.71 in the tele state, and an HFOV is 12.80 in the wide state and 8.01 in the tele state. In the case of a focal length, a total focal length f1-f4 of the first to fourth lenses is 19.4, and a total focal length f6-f9 of the sixth to ninth lenses is 7.94.

Referring to FIGS. 9A and 11A, it can be seen that a longitudinal spherical aberration from a center to an end of the image sensor ranges from -0.05 [mm] to 0.1 [mm] regardless of the wavelength. Specifically, in each of the wide state and the tele state, it can be seen that the longitudinal spherical aberration ranges from -0.1 [mm] to 0.1 [mm].

In addition, it can be seen that an astigmatic field curve from the center to the end of the image sensor rages from -0.05 [mm] to 0.05 [mm] regardless of the wavelength. Specifically, in each of the wide state and the tele state, it can be seen that the astigmatic field curve ranges about from -0.05 [mm] to 0.05 [mm].

In addition, distortion from the center to the end of the image sensor ranges from -2 [%] to 2 [%] regardless of the wavelength. Specifically, in each of the wide state and the tele state, it can be seen that the distortion ranges about from -2 [%] to 2 [%].

Referring to FIGS. 9B and 11B, in the optical system according to the embodiment of the present invention, in each of the wide state and the tele, it can be seen that modulation at around a defocusing position 0 [mm] has a value close to a diffraction limit which is a limit value. For example, in the optical system, in each of the wide state and the tele, the modulation at around the defocusing position 0 [mm] may be 0.5 or more.

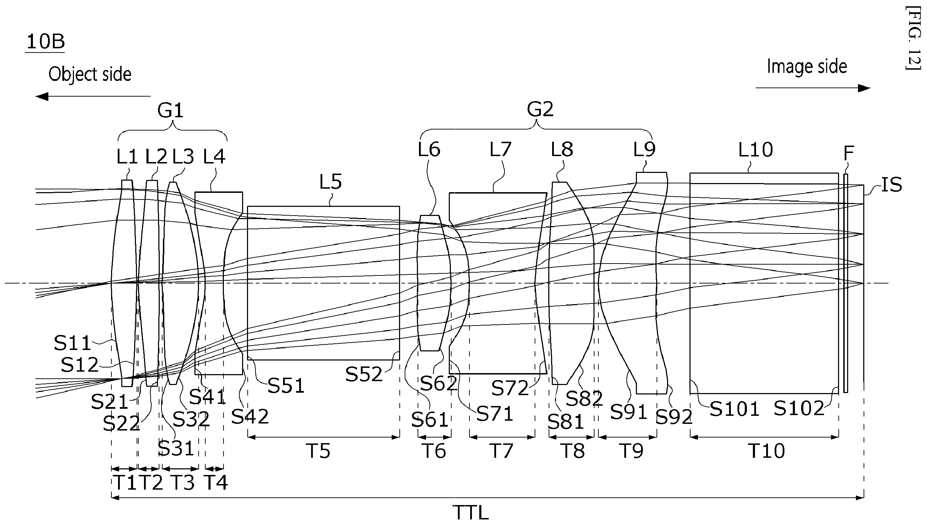

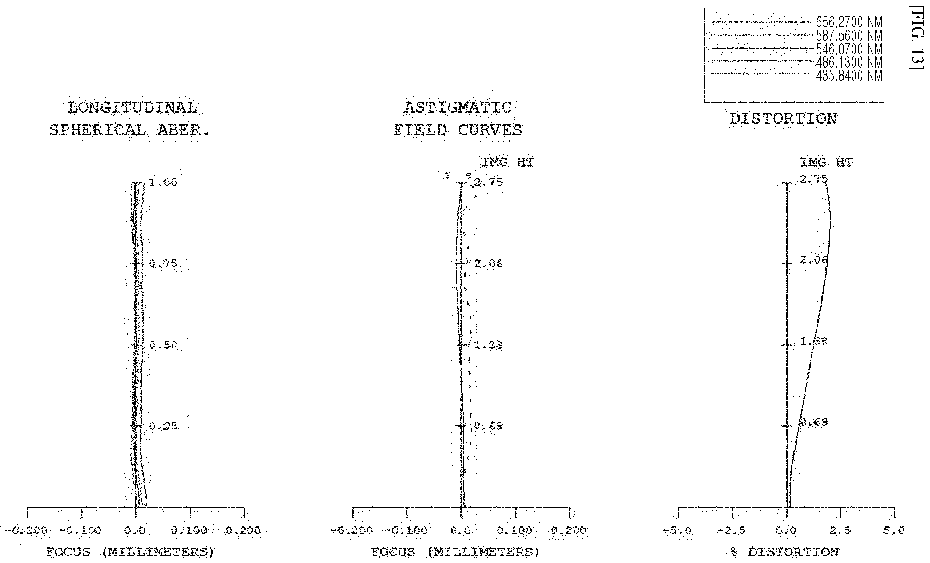

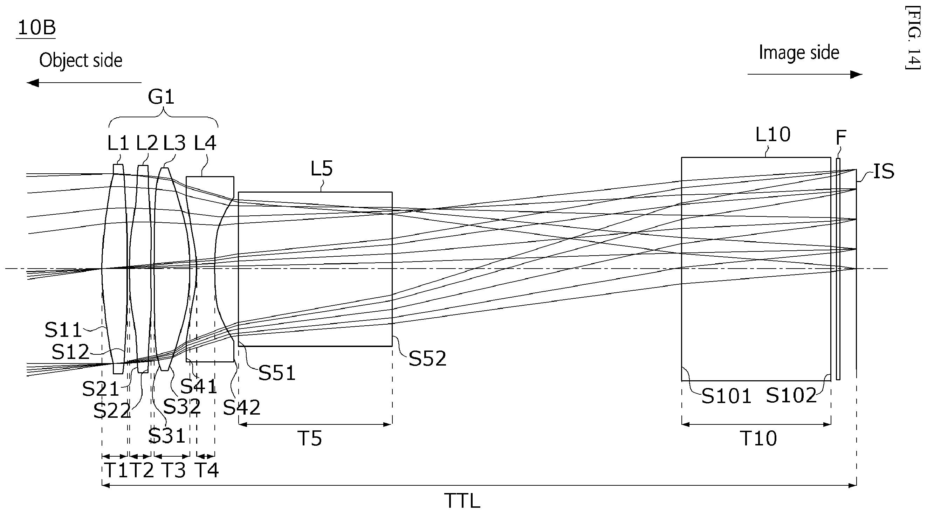

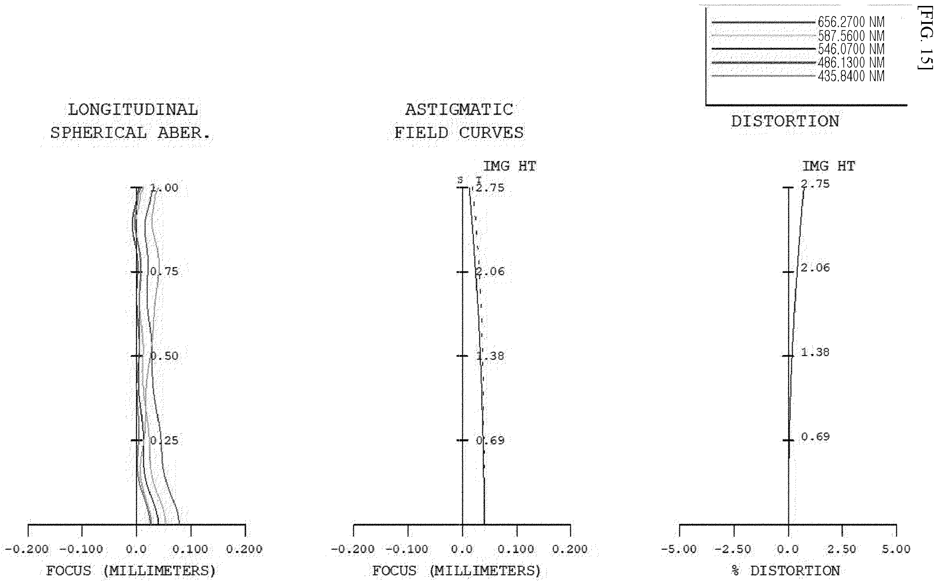

FIG. 12 is a cross-sectional view illustrating an optical system in a wide state according to a second embodiment, and FIG. 13 is a graph showing longitudinal spherical aberrations, astigmatic field curves, and distortion of light of wavelengths of 435 nm, 486 nm, 546 nm, 587 nm, and 656 nm in the optical system in the wide state according to the second embodiment. FIG. 14 is a cross-sectional view illustrating the optical system in a tele state according to the second embodiment, and FIG. 15 is a graph showing longitudinal spherical aberrations, astigmatic field curves, and distortion of light of wavelengths of 435 nm, 486 nm, 546 nm, 587 nm, and 656 nm in the optical system in the tele state according to the second embodiment.

The above-described content, excluding shapes illustrated in the drawings and content which will be described below, may apply equally below. Accordingly, at least one or two or more of Expressions 1 to 38 described in Table 6 may equally satisfy an optical system 10B according to the second embodiment.

**[Table 7]**

| Lens surface No. | Koenig constant (K) | A | B | C | D |
|---|---|---|---|---|---|
| S11 | -7.30412 | -0.00593 | 0.002013 | -0.00034 | 0.00004 |
| S12 | 797.893 | -0.01778 | 0.007361 | -0.00131 | 0.000125 |
| S21 | -9.45277 | 0.00116 | -0.00323 | 0.000861 | -0.00008 |
| S22 | -5246.45 | 0.001076 | -0.00679 | 0.003391 | -0.00086 |
| S31 | -288.24 | -0.02066 | 0.009474 | -0.00114 | -0.00023 |
| S32 | -56.3412 | -0.04078 | 0.02149 | -0.00754 | 0.001781 |
| S41 | -12.6507 | 0.011757 | -0.0066 | 0.003596 | -0.00103 |
| S42 | 26.4587 | 0.069556 | -0.03594 | 0.01659 | -0.00559 |
| S51 | - | - | - | - | - |
| S52 | - | - | - | - | - |
| S61 | -1.55E+06 | 0.000864 | 0.00298 | -0.00182 | 0.001239 |
| S62 | -1.02867 | -0.00909 | 0.008579 | -0.00339 | 0.001659 |
| S71 | 2.09799 | -0.04121 | 0.020092 | -0.00372 | 0.000084 |
| S72 | -10.0763 | -0.00695 | -0.00254 | 0.001559 | -0.00037 |
| S81 | 2267.69 | 0.036898 | -0.02312 | 0.00714 | -0.00137 |
| S82 | -45028 | -0.01216 | -0.01214 | 0.008035 | -0.00295 |
| S91 | -4.08616 | 0.010863 | -0.00879 | 0.004342 | -0.0014 |
| S92 | -1.98E+44 | 0.019172 | -0.00209 | -0.00094 | 0.000595 |
| S101 | - | - | - | - | - |
| S102 | - | - | - | - | - |

**[Table 8]**

| Lens surface No. | E | F | G | H | J |
|---|---|---|---|---|---|
| S11 | -4E-06 | -2.62E-08 | 3.66E-08 | -2.55E-09 | 5.42E-11 |
| S12 | -8E-06 | 2.98E-07 | -7.70E-09 | 1.16E-10 | -7.66E-13 |
| S21 | -0.00001 | 0.000004 | -3.86E-07 | 1.89E-08 | -3.58E-10 |
| S22 | 0.000129 | -1.2E-05 | 0.000001 | -1.69E-08 | 1.97E-10 |
| S31 | 0.000096 | -1.4E-05 | 0.000001 | -3.73E-08 | 5.67E-10 |
| S32 | -0.00028 | 0.000029 | -2E-06 | 6.69E-08 | -1.02E-09 |
| S41 | 0.000125 | 0.000012 | -6E-06 | 0.000001 | -3.46E-08 |
| S42 | 0.001272 | -0.00019 | 0.000018 | -1E-06 | 2.32E-08 |
| S51 | - | - | - | - | - |
| S52 | - | - | - | - | - |
| S61 | -0.00052 | 0.000129 | -1.8E-05 | 0.000001 | -3.93E-08 |
| S62 | -0.00068 | 0.000173 | -2.8E-05 | 0.000003 | -9.90E-08 |
| S71 | 0.000048 | -4E-06 | -7.25E-08 | 1.97E-08 | -5.86E-10 |
| S72 | 0.000053 | -5E-06 | 2.57E-07 | -7.78E-09 | 9.98E-11 |
| S81 | 0.000173 | -1.4E-05 | 0.000001 | -2.09E-08 | 2.53E-10 |
| S82 | 0.00073 | -0.00012 | 0.000013 | -1E-06 | 2.32E-08 |
| S91 | 0.000311 | -4.7E-05 | 0.000005 | -2.59E-07 | 6.26E-09 |
| S92 | -0.00016 | 0.000023 | -2E-06 | 9.13E-08 | -1.75E-09 |
| S101 | - | - | - | - | - |

**[Table 9]**

| Lens No. | Lens surface No. | Nd/Vd | Radius (R, mm) | Thickness (mm) | Effective diameter (CA) |
|---|---|---|---|---|---|
| First lens | S11 | 524700.56 | 8.09411 | 0.698601 | 5.22 |
| | S12 | | -88.1336 | 0.05 | 5.221912 |
| Second lens | S21 | 598530.304 | 7.9544 | 0.572791 | 5.187772 |
| | S22 | | 47.6845 | 0.1 | 5.153716 |
| Third lens | S31 | 524700.56 | 17.9366 | 0.985245 | 5.106544 |
| | S32 | | -6.69268 | 0.189017 | 5.011248 |
| Fourth lens | S41 | 541513.319 | -2.93575 | 0.491135 | 4.632361 |
| | S42 | | 13.3943 | 0.668871 | 3.9 |
| Fifth lens | S51 | 717361.2951 | 1.00E+18 | 4.2 | 3.867896 |
| | S52 | | 1.00E+18 | 0.5 | 3.489905 |
| Sixth lens | S61 | 671000.193 | -582.039 | 0.917602 | 3.405489 |
| | S62 | | -4.65215 | 0.506378 | 3.3 |
| Seventh lens | S71 | 627079.2457 | -3.92383 | 1.79107 | 3.359425 |
| | S72 | | 3.4717 | 0.379588 | 4.560555 |
| Eighth lens | S81 | 524700.56 | 122.779 | 1.27415 | 4.74 |
| | S82 | | 97.1883 | 0.1 | 5.112544 |
| Ninth lens | S91 | 524700.56 | 2.15109 | 1.5962 | 5.59915 |
| | S92 | | -1342.01 | 0.936269 | 5.580744 |
| Tenth lens | S101 | 717361.2951 | 1.00E+18 | 4.1 | 5.567085 |
| | S102 | | 1.00E+18 | 0.15 | 5.514377 |
| Filter | F1 | 523.5447 | 1.00E+18 | 0.11 | 5.511054 |
| | F2 | | 1.00E+18 | 0.440004 | 5.509456 |
| Sensor | IS | | 1.00E+18 | - | 5.505036 |

A unit of a thickness is [mm]. In Table 8 and the like, central thicknesses [mm] of lenses, distances [mm] between lenses, curvatures, refractive indexes, and Abbe numbers of lenses are shown. In addition, a unit of a general distance described in the specification is [mm]. In addition, in a process of zooming in the tele state, since a second lens group G2 is misaligned, the sixth to ninth lens are removed. In addition, properties of the removed sixth to ninth lenses may be changed. However, the descriptions of the first to fifth lenses may be the same. In addition, since the sixth to ninth lenses are removed, a thickness written to correspond to an image side surface of the fifth lens is a distance between the fifth lens and the ninth lens, which is not a distance between the fifth lens and the sixth lens. Referring to Table 9, each surface of the first to fourth lenses and the sixth to ninth lenses may be formed in a convex or concave shape.

A first lens L1 may be a lens whose object side surface S11 is convex toward an object side. The first lens L1 may be the lens whose image side surface S12 is concave toward the object side.

A second lens L2 may be a lens whose object side surface L21 is convex toward the object side. The second lens L2 may be the lens whose image side surface L22 is convex toward the object side.

In addition, as in the drawings, a thickness T1 of the first lens L1 may correspond to a thickness written to correspond to the object side surface S11 of the first lens L1 in Table 1. In addition, a thickness T2 of the second lens L2 may correspond to a thickness written to correspond to the object side surface L21 of the second lens L2 in Table 1. A thickness T3 of a third lens L3 may correspond to a thickness written to correspond to an object side surface S31 of the third lens L3 in Table 1. A thickness T4 of a fourth lens L4 may correspond to a thickness written to correspond to an object side surface S41 of the fourth lens L4 in Table 1. A thickness T6 of a sixth lens L6 may correspond to a thickness written to correspond to an object side surface S61 of the sixth lens L6 in Table 1. A thickness T7 of a seventh lens L7 may correspond to a thickness written to correspond to an object side surface S71 of the seventh lens L7 in Table 1. A thickness T8 of an eighth lens L8 may correspond to a thickness written to correspond to an object side surface S81 of the eighth lens L8 in Table 1. A thickness T9 of a ninth lens L9 may correspond to a thickness written to correspond to an object side surface S91 of the ninth lens L9 in Table 1.

In addition, in the present embodiment, an EFL is 12.0 in the wide state and 19.4 in the tele. An Fno is 2.29 in the wide state and 3.71 in the tele state, and an HFOV is 12.68 in the wide state and 8.03 in the tele state. In the case of a focal length, a total focal length f1-f4 of the first to fourth lenses is 19.4, and a total focal length f6-f9 of the sixth to ninth lenses is 9.29.

Referring to FIGS. 13 and 15, it can be seen that a longitudinal spherical aberration from a center to an end of an image sensor ranges from -0.1 [mm] to 0.2 [mm] regardless of the wavelength. Specifically, in each of the wide state and the tele state, it can be seen that the longitudinal spherical aberration ranges from -0.1 [mm] to 0.2 [mm].

In addition, it can be seen that an astigmatic field curve from the center to the end of the image sensor ranges from -0.1 [mm] to 0.2 [mm] regardless of the wavelength. Specifically, in each of the wide state and the tele state, it can be seen that the astigmatic field curve ranges from about -0.1 [mm] to 0.2 [mm].

In addition, it can be seen that a distortion from the center to the end of the image sensor ranges from -2 [%] to 5 [%] regardless of the wavelength. Specifically, in each of the wide state and the tele state, it can be seen that the distortion ranges from about -2 [%] to 5 [%]. Particularly, in the tele state, the distortion may range from about -1 [%] to 1 [%].

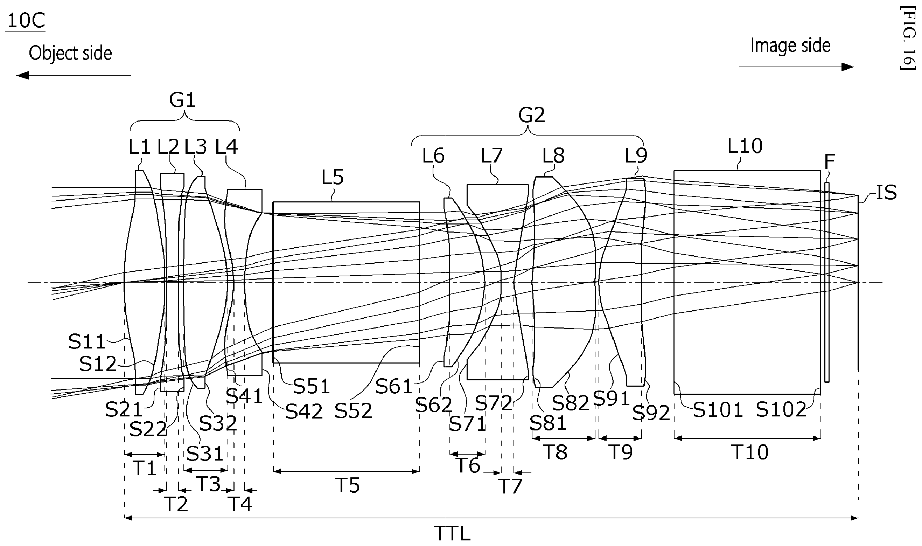

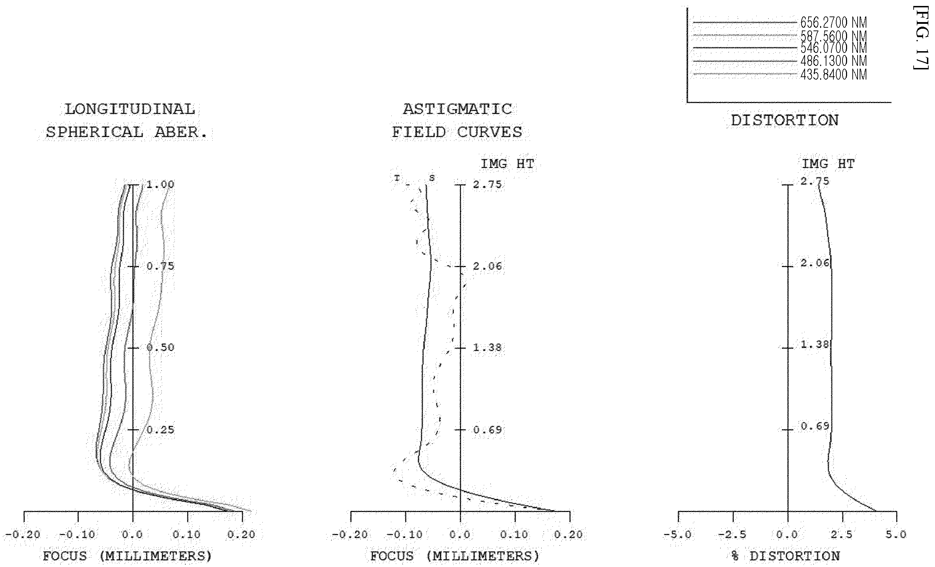

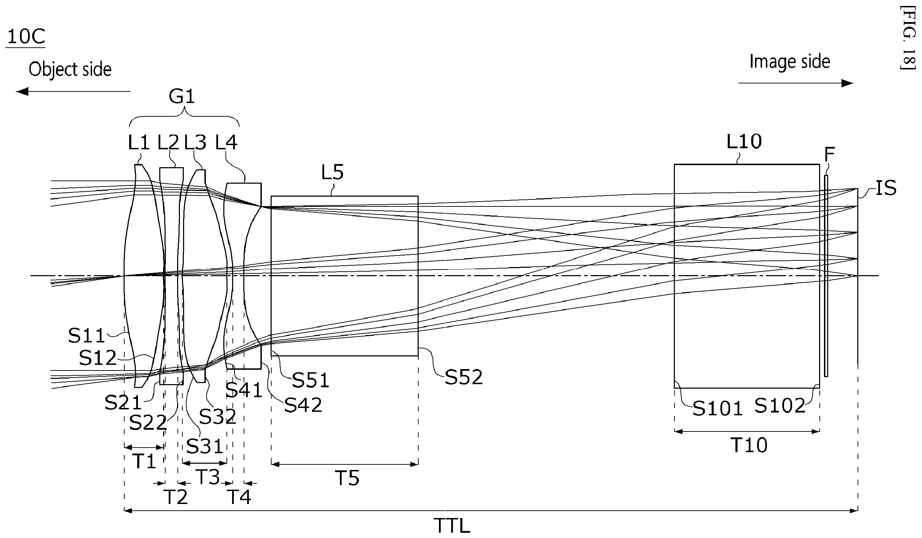

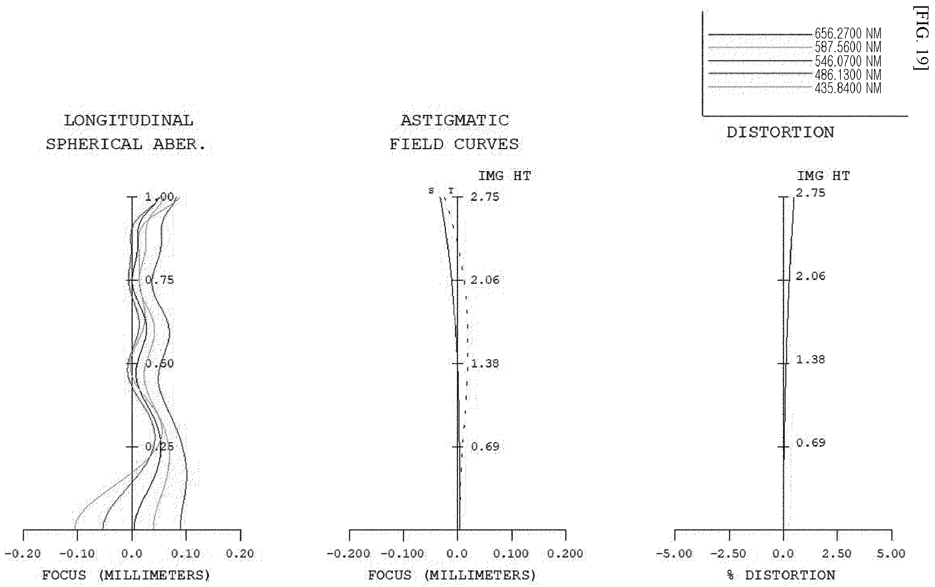

FIG. 16 is a cross-sectional view illustrating an optical system in a wide state according to a third embodiment, and FIG. 17 is a graph showing longitudinal spherical aberrations, astigmatic field curves, and distortion of light of wavelengths of 435 nm, 486 nm, 546 nm, 587 nm, and 656 nm in the optical system in the wide state according to the third first embodiment. FIG. 18 is a cross-sectional view illustrating the optical system in a tele state according to the third embodiment, and FIG. 19 is a graph showing longitudinal spherical aberrations, astigmatic field curves, and distortion of light of wavelengths of 435 nm, 486 nm, 546 nm, 587 nm, and 656 nm in the optical system in the tele state according to the third embodiment.

The above-described content, excluding shapes illustrated in the drawings and content which will be described below, may apply equally below. Accordingly, at least one or two or more of Expressions 1 to 38 described in Table 6 may equally satisfy an optical system 10C according to the second embodiment.

**[Table 10]**

| Lens surface No. | Koenig constant (K) | A | B | C | D |
|---|---|---|---|---|---|
| S11 | -5.41748 | -0.00253 | 0.000143 | 0.000132 | -5.1E-05 |
| S12 | 2.62288 | -0.01384 | 0.004903 | -0.00073 | 0.000059 |
| S21 | -260.476 | 0.002644 | -0.00712 | 0.00268 | -0.0005 |
| S22 | -142.081 | 0.022767 | -0.02533 | 0.010934 | -0.00253 |
| S31 | -162.026 | 0.001758 | -0.0122 | 0.007685 | -0.0021 |
| S32 | -39.2629 | -0.07192 | 0.04334 | -0.01498 | 0.003365 |
| S41 | -13.8564 | -0.03635 | 0.03867 | -0.01707 | 0.004591 |
| S42 | 31.9549 | 0.038681 | -0.00806 | 0.000384 | 0.000234 |
| S51 | - | - | - | - | - |
| S52 | - | - | - | - | - |
| S61 | -1.55E+06 | -0.01424 | 0.009489 | -0.00653 | 0.003021 |
| S62 | -0.586679 | -0.00885 | 0.011639 | -0.00545 | 0.001501 |
| S71 | 0.38541 | -0.0923 | 0.083252 | -0.04044 | 0.012176 |
| S72 | -9.48566 | -0.04393 | 0.032675 | -0.01395 | 0.003625 |
| S81 | -27.4863 | 0.023912 | -0.02086 | 0.009136 | -0.00258 |
| S82 | -45028 | -0.01436 | -0.00515 | 0.002627 | -0.00068 |
| S91 | -4.71417 | 0.012417 | -0.00867 | 0.003591 | -0.0011 |
| S92 | -1.98E+44 | 0.014564 | -0.00192 | -0.00024 | 0.000021 |
| S101 | - | - | - | - | - |
| S102 | - | - | - | - | - |
| | | | | | |

**[Table 11]**

| Lens surface No. | E | F | G | H | J |
|---|---|---|---|---|---|
| S11 | 0.00001 | -1E-06 | 8.37E-08 | -3.06E-09 | 4.51E-11 |
| S12 | -3E-06 | 1.12E-07 | -2.86E-09 | 4.45E-11 | -3.03E-13 |
| S21 | 0.00005 | -2E-06 | -1.31E-08 | 5.17E-09 | -1.38E-10 |
| S22 | 0.000346 | -2.9E-05 | 0.000001 | -3.75E-08 | 4.20E-10 |
| S31 | 0.000318 | -2.9E-05 | 0.000002 | -4.58E-08 | 5.80E-10 |
| S32 | -0.00051 | 0.000051 | -3E-06 | 1.19E-07 | -1.91E-09 |
| S41 | -0.0008 | 0.000092 | -7E-06 | 2.73E-07 | -4.86E-09 |
| S42 | -4.7E-05 | -1.60E-08 | 0.000001 | -9.35E-08 | 3.18E-09 |
| S51 | - | - | - | - | - |
| S52 | - | - | - | - | - |
| S61 | -0.00091 | 0.000174 | -2.1E-05 | 0.000001 | -3.92E-08 |
| S62 | -0.00025 | 0.000025 | -1E-06 | 4.38E-08 | -9.43E-10 |
| S71 | -0.0023 | 0.000267 | -1.8E-05 | 0.000001 | -8.45E-09 |
| S72 | -0.0006 | 0.000066 | -5E-06 | 1.77E-07 | -3.02E-09 |
| S81 | 0.000451 | -4.8E-05 | 0.000003 | -1.02E-07 | 1.44E-09 |
| S82 | 0.000116 | -1.3E-05 | 0.000001 | -4.10E-08 | 7.64E-10 |
| S91 | 0.000219 | -2.7E-05 | 0.000002 | -7.49E-08 | 1.24E-09 |
| S92 | 0.000015 | -3E-06 | 2.92E-07 | -1.25E-08 | 2.16E-10 |
| S101 | - | - | - | - | - |
| S102 | - | - | - | - | - |

**[Table 12]**

| Lens No. | Lens surface No. | Nd/Vd | Radius (R, mm) | Thickness (mm) | Effective diameter (CA) |
|---|---|---|---|---|---|
| First lens | S11 | 552003.4181 | 8.22719 | 1.24055 | 6.399996 |
| | S12 | | -13.5832 | 0.049999 | 6.429931 |
| Second lens | S21 | 597410.2468 | 50.8229 | 0.4 | 6.260366 |
| | S22 | | 25.6897 | 0.15 | 6.106623 |
| Third lens | S31 | 559221.3938 | 36.2795 | 1.41738 | 6.11595 |
| | S32 | | -6.11515 | 0.167537 | 5.987882 |
| Fourth lens | S41 | 541357.3195 | -3.81763 | 0.348639 | 5.388449 |
| | S42 | | 16.3123 | 0.882219 | 4.386149 |
| Fifth lens | S51 | 717361.2951 | 1.00E+18 | 4.6 | 4.399059 |
| | S52 | | 1.00E+18 | 1 | 4.628674 |
| Sixth lens | S61 | 631555.2152 | -73.9198 | 1.0956 | 4.712921 |
| | S62 | | -3.38956 | 0.50964 | 4.894395 |
| Seventh lens | S71 | 671000.193 | -3.66667 | 0.400012 | 4.874026 |
| | S72 | | 2.76099 | 0.563366 | 5.61715 |
| Eighth lens | S81 | 594773.3002 | 15.2374 | 2 | 5.797254 |
| | S82 | | -113.786 | 0.1 | 6.024608 |
| Ninth lens | S91 | 578130.3426 | 2.65372 | 1.34184 | 5.972107 |
| | S92 | | -82.3131 | 1.05303 | 5.876588 |
| Tenth lens | S101 | 717361.2951 | 1.00E+18 | 4.6 | 6.482905 |
| | S102 | | 1.00E+18 | 0.15 | 5.799877 |
| Filter | F1 | 523.5447 | 1.00E+18 | 0.11 | 5.761289 |
| | F2 | | 1.00E+18 | 1.24055 | 5.742823 |
| Sensor | IS | | - | - | 5.525385 |

A unit of a thickness is [mm]. In Table 12 and the like, central thicknesses [mm] of lenses, distances [mm] between lenses, curvatures, refractive indexes, and Abbe numbers of lenses are shown. In addition, a unit of a general distance described in the specification is [mm]. In addition, in a process of zooming in the tele state, since a second lens group G2 is misaligned, the sixth to ninth lens are removed. In addition, properties of the removed sixth to ninth lenses may be changed. However, the descriptions of the first to fifth lenses may be the same. In addition, since the sixth to ninth lenses are removed, a thickness written to correspond to an image side surface of the fifth lens is a distance between the fifth lens and the ninth lens, which is not a distance between the fifth lens and the sixth lens. Referring to Table 12, each surface of the first to fourth lenses and the sixth to ninth lenses may be formed in a convex or concave shape.

A first lens L1 may be a lens whose object side surface S11 is convex toward an object side. The first lens L1 may be the lens whose image side surface S12 is concave toward the object side.

A second lens L2 may be a lens whose object side surface L21 is convex toward the object side. The second lens L2 may be the lens whose image side surface L22 is convex toward the object side.

In addition, as in the drawings, a thickness T1 of the first lens L1 may correspond to a thickness written to correspond to the object side surface S11 of the first lens L1 in Table 1. In addition, a thickness T2 of the second lens L2 may correspond to a thickness written to correspond to the object side surface L21 of the second lens L2 in Table 1. A thickness T3 of a third lens L3 may correspond to a thickness written to correspond to an object side surface S31 of the third lens L3 in Table 1. A thickness T4 of a fourth lens L4 may correspond to a thickness written to correspond to an object side surface S41 of the fourth lens L4 in Table 1. A thickness T6 of a sixth lens L6 may correspond to a thickness written to correspond to an object side surface S61 of the sixth lens L6 in Table 1. A thickness T7 of a seventh lens L7 may correspond to a thickness written to correspond to an object side surface S71 of the seventh lens L7 in Table 1. A thickness T8 of an eighth lens L8 may correspond to a thickness written to correspond to an object side surface S81 of the eighth lens L8 in Table 1. A thickness T9 of a ninth lens L9 may correspond to a thickness written to correspond to an object side surface S91 of the ninth lens L9 in Table 1.

In addition, in the present embodiment, an EFL is 11.9 in the wide state and 20.5 in the tele state. An Fno is 1.99 in the wide state and 3.42 in the tele state, and an HFOV is 12.73 in the wide state and 7.57 in the tele state. In the case of a focal length, a total focal length f1-f4 of the first to fourth lenses is 20.59, and a total focal length f6-f9 of the sixth to ninth lenses is 8.35. Referring to FIGS. 17 and 19, it can be seen that a longitudinal spherical aberration from a center to an end of an image sensor ranges from -0.05 [mm] to 0.05 [mm] regardless of the wavelength. Specifically, in each of the wide state and the tele state, it can be seen that the longitudinal spherical aberration ranges from -0.05 [mm] to 0.05 [mm].

In addition, it can be seen that an astigmatic field curve from the center to the end of the image sensor ranges from -0.05 [mm] to 0.05 [mm] regardless of the wavelength. Specifically, in each of the wide state and the tele state, it can be seen that the astigmatic field curve ranges from about -0.05 [mm] to 0.05 [mm].

In addition, it can be seen that distortion from the center to the end of the image sensor ranges from -1 [%] to 2.5 [%] regardless of the wavelength. Specifically, in each of the wide state and the tele state, it can be seen that the distortion ranges from about -1 [%] to 2.5 [%]. Particularly, in the tele state, the distortion may range from about -0.5 [%] to 1.5 [%].

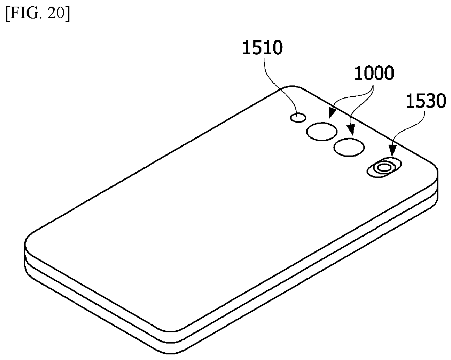

FIG. 20 is a perspective view illustrating a mobile terminal to which the camera module according to the embodiment is applied.

As illustrated in FIG. 20, a mobile terminal 1500 according to the embodiment may include the camera module 1000, a flash module 1530, and an AF device 1510.

The camera module 1000 may have an image capturing function and an AF function. For example, the camera module 1000 may include the AF function using an image.

The camera module 1000 processes an image frame of a still image or video image obtained by an image sensor in an image capturing state or video call state.

The processed image frame may be displayed on a predetermined display and stored in a memory. A camera (not shown) may also be disposed on a front surface of a body of the mobile terminal.

For example, the camera module 1000 may include a first camera module 1000 and a second camera module 1000, and an AF or zoom function and an OIS function may be implemented using the first camera module 10000.

The flash module 1530 may include a light-emitting element which emits light. The flash module 1530 may be operated by a camera operation of the mobile terminal or control of the user.

The AF device 1510 may include one package of surface light-emitting laser elements as a light-emitter.

The AF device 1510 may have an AF function using a laser. The AF device 1510 may be mainly used in an environment in which the AF function using the image of the camera module 1000 is degraded, for example, in a condition of proximity of 10 m or less, or in a dark environment.

The AF device 1510 may include the light-emitter including a vertical cavity surface emitting laser (VCSEL) and a light-receiver, such as a photodiode, which converts light energy into electric energy.

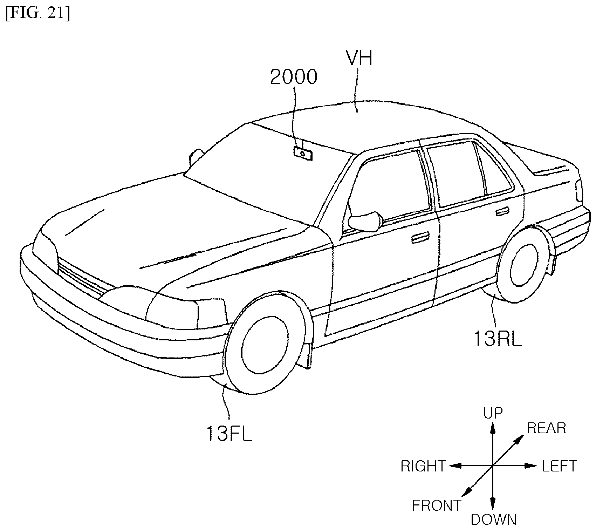

FIG. 21 is a perspective view illustrating a vehicle to which the camera module according to the embodiment is applied.

For example, FIG. 21 is a view illustrating an exterior of the vehicle including a vehicle driving assistance device to which the camera module 1000 according to the embodiment is applied.

Referring to FIG. 21, a vehicle 700 of the embodiment may include wheels 13FL and 13FR and a predetermined sensor. The sensor may be a camera sensor 2000 but is not limited thereto.

The camera 2000 may be a camera sensor to which the camera module 1000 according to the embodiment is applied. The vehicle 700 of the embodiment may obtain image information through the camera sensor 2000 which captures a front image or surrounding image, determine a situation in which traffic lines are not identified using the image information, and generate unidentified traffic lines.

For example, the camera sensor 2000 may obtain a front image by capturing an image facing forward from the vehicle 700, and a processor (not shown) may obtain image information by analyzing an object included in the front image.

For example, when an image captured by the camera sensor 2000 includes images of objects such as vehicle lines, adjacent vehicles, obstructions against traveling, and indirect road markings corresponding to central dividers, curbs, and street trees, the processor may detect the objects, so that the objects may be included in image information. In this case, the processor may obtain information of the objects and distances detected by the camera sensor 2000 to supplement the image information.

The image information may be information of the objects whose images are captured. The camera sensor 2000 may include an image sensor and an image processing module.

The camera sensor 2000 may process a still image or video image captured by the image sensor (such as, a complementary metal-oxide semiconductor (CMOS) or charge coupled device (CCD)).

The image processing module may process the still image and the video image captured by the image sensor to extract required information and transmit the extracted information to the processor.

In this case, the camera sensor 2000 may include a stereo camera to improve measurement accuracy of an object and further secure information of a distance between the vehicle 700 and an object, but is not limited thereto.

While the present disclosure has been described with reference to embodiments above, the embodiments are only exemplary and do not limit the present specification, and it will be understood by those skilled in the art that various changes and applications which are not illustrated above may be made without departing from the essential characteristics of the present embodiments. For example, components specifically described according to the embodiments may be modified. In addition, such differences relating to the modifications and applications should be understood to be included in the scope of the present specification defined by the appended claims.

## Claims

1. An optical system comprising:
a first lens group disposed adjacent to an object side and has a first optical axis;
a second lens group disposed adjacent to an image side and has a second optical axis; and
a first optical path conversion member disposed between the first lens group and the second lens group,
wherein the second lens group is moveable,
the optical system is in a wide state when a center of the second lens group overlaps the first optical path conversion member in a direction of the second optical axis, and
the optical system is in a tele state when the center of the second lens group does not overlap the first optical path conversion member in the direction of the second optical axis.

2. The optical system of claim 1, wherein, in the tele state, the first lens group overlaps the second lens group in the direction of the second optical axis.

3. The optical system of claim 1, wherein, in at least one of the tele state and the wide state, a ratio of a focal length to an F-number (Fno) ranges from 5 to 7.

4. The optical system of claim 1, wherein a distance between the first lens group and the second lens group is 5 mm or more.

5. The optical system of claim 1, wherein, in the wide state, a distance between an image side surface of an outermost side lens of the second lens group and an image sensor is 5 mm or more.

6. The optical system of claim 1, wherein, in the wide state, the second lens group is aligned with and overlaps the first optical path conversion member along the second optical axis.

7. The optical system of claim 1, wherein, in the wide state, the second lens group is aligned with the first optical path conversion member, and at least a portion of the second lens group does not overlap the first optical path conversion member along the second optical axis.

8. The optical system of claim 1, wherein a ratio of a total track length (TTL) to a back focus length (BFL) ranges from 4 to 10.

9. An optical system comprising:
a first lens group;
a second lens group disposed apart from the first lens group; and
a first optical path conversion member disposed between the first lens group and the second lens group,
wherein an F-number (Fno) is 3.5 or less when light passes through the first lens group and does not pass through the second lens group.

10. The optical system of claim 1, wherein the first lens group is disposed in a thickness direction of the first optical path conversion member.
